# EUROPEAN PATENT APPLICATION

(11) **EP 4 844 586 A1**
(43) Date of publication of application: **25.11.2026**
(21) Application number: 24921426.3
(22) Date of filing: 09.09.2024
(51) Int. Cl.: G06F 11/14

(54) **DATA RECOVERY METHOD AND APPARATUS, AND COMPUTING DEVICE**

(30) Priority: 02.02.2024 CN 202410161112; 08.07.2024 CN 202410911375
(71) Applicant: Huawei Technologies Co., Ltd., Shenzhen, Guangdong 518129 (CN)
(72) Inventor: YANG, Ying, Shenzhen, Guangdong 518129 (CN); ZHANG, Wen, Shenzhen, Guangdong 518129 (CN); WANG, Binglai, Shenzhen, Guangdong 518129 (CN); HU, Gang, Shenzhen, Guangdong 518129 (CN)
(74) Representative: Huawei European IPR
(86) International application number: PCT/CN2024/117834
(87) International publication number: WO 2025/161401

(57) **Abstract**

This application discloses a data recovery method and apparatus, and a compute device, pertaining to the field of data security technologies. The method is applied to a storage system that stores data in a block-level storage manner. The method includes: determining a target object whose data needs to be recovered; determining, based on a first mapping relationship set, a first storage address at which a data block of the target object is stored in a first snapshot; and recovering the data of the target object based on data stored at the first storage address in the first snapshot. The target object is any type of semantic-level data, the storage system stores a data block of the target object in a block-level manner, the first snapshot is a snapshot obtained by performing a snapshot operation on data in the storage system at a first time, and the first mapping relationship set includes a correspondence between an object maintained by the storage system and a storage address of a data block of the object as of the first time. According to the method, data recovery at the granularity of semantic-level data can be implemented.

## Description

This application claims priority to Chinese Patent Application No. 202410161112.9, filed on February 2, 2024 and entitled "DATA RECOVERY METHOD AND APPARATUS, AND COMPUTE DEVICE", and claims priority to Chinese Patent Application No. 202410911375.7, filed on July 8, 2024 and entitled "DATA RECOVERY METHOD AND APPARATUS, AND COMPUTE DEVICE", both of which are incorporated herein by reference in their entireties.

### TECHNICAL FIELD

This application relates to the field of data security technologies, and in particular, to a data recovery method and apparatus, and a compute device.

### BACKGROUND

A storage area network (storage area network, SAN) is a dedicated high-speed network that provides access to block-level storage, typically including interconnected user devices, switching devices, and storage devices. The SAN is one of the mainstream storage products widely used and provides block storage services for key application data in enterprises, finance, and data centers.

When data stored in a SAN is under a malicious attack (for example, infected with ransomware) and needs to be recovered, related technologies generally recover the data by taking a snapshot of data in the storage area corresponding to the logical unit number (logical unit number, LUN) or storage volume (volume). However, this data recovery approach operates at a coarse granularity, resulting in slow data recovery.

### SUMMARY

This application provides a data recovery method and apparatus, and a compute device. The method can implement data recovery at the granularity of semantic-level data.

The technical solutions provided in this application are as follows.

According to a first aspect, this application provides a data recovery method. The method is applied to a storage system that stores data in a block-level storage manner. The method includes: determining a target object whose data needs to be recovered; determining, based on a first mapping relationship set associated with a first snapshot, a first storage address at which a data block of the target object is stored in the first snapshot; and recovering the data of the target object based on data stored at the first storage address in the first snapshot. The target object is any type of semantic-level data, and the data block of the target object is stored in the storage system in a block-level manner. The first snapshot is a snapshot obtained by performing a snapshot operation on data in the storage system at a first time, and the first mapping relationship set associated with the first snapshot includes a correspondence between an object maintained by the storage system and a storage address of a data block of the object as of the first time.

For a storage system that stores data in a block-level storage manner, the method provided in this application implements data recovery at a granularity of semantic-level data. The semantic-level data refers to data having semantics that can be understood/recognized by a user. As an example, the semantic-level data includes but is not limited to a file (such as a document file or a worksheet file), a database, a data table, and the like. Compared with data recovery at a granularity of a logical unit number (logical unit number, LUN) or a storage volume, data recovery using the method provided in this application is at a fine granularity, achieving fast and efficient data recovery.

In a possible design scheme, the method further includes: receiving an input/output (input/output, IO) request, where the IO request indicates to perform a write operation on to-be-processed data, the IO request includes an identifier of an object to which the to-be-processed data belongs, and the object to which the to-be-processed data belongs is any type of semantic-level data; and updating the first mapping relationship set based on the identifier of the object to which the to-be-processed data belongs and a storage address of the to-be-processed data. In this possible design, the first mapping relationship set can be maintained and updated based on the received IO request.

In another possible design scheme, the determining the target object whose data needs to be recovered includes: receiving an IO request that carries a first identifier and first data, where the first data is data of a first object represented by the first identifier; detecting whether the first data is infected with a virus or under a malicious attack; and when it is determined that the first data is infected with a virus or under a malicious attack, determining the first object as the target object. According to this possible design, the target object whose data needs to be recovered is determined based on the data carried in the received IO request.

In another possible design scheme, the determining the target object whose data needs to be recovered includes: detecting a data block stored in the storage system, to determine a target data block in the storage system infected with a virus or under a malicious attack; querying the first mapping relationship set based on a storage address of the target data block, to determine a first object corresponding to the storage address of the target data block; and determining the first object as the target object. According to this possible design, in a case where missed detection (missed virus detection or missed attack detection) occurs when the storage system determines, based on the data carried in the received IO request, an object whose data needs to be recovered, or in a case where the storage system is at risk of being infected with a virus or subjected to an attack, the target object whose data needs to be recovered can be determined by detecting a data block stored in the storage system.

In another possible design scheme, before the determining the first object as the target object, the method further includes: sending a first recovery request to a client device, where the first recovery request includes an identifier of the first object, and the first recovery request is used to determine whether to recover data of the first object; and receiving an acknowledgment message returned by the client device, where the acknowledgment message indicates to recover the data of the first object. According to this possible design, the client device participates in determining the target object whose data needs to be recovered, improving user participation in an implementation process of the solution of this application. Further, the client device may indicate that recovery is not required for data that the user deems unimportant, reducing occupation of compute resources of the storage system while ensuring user satisfaction.

In another possible design scheme, the sending the first recovery request to the client device includes: sending the first recovery request to the client device through a preset protocol interface. The receiving the acknowledgment message returned by the client device includes: receiving, through a preset protocol interface, the acknowledgment message returned by the client device. According to this possible design, the recovery request and the acknowledgment message can be transmitted between the storage system and the client device without affecting normal data transmission on an existing standard protocol interface.

In another possible design scheme, the determining the target object whose data needs to be recovered includes: when receiving a second recovery request sent by a client device, determining a first object as the target object. The second recovery request includes an identifier of the first object, and the second recovery request is used to request to recover data of the first object. According to this possible design, the client device can specify a target object whose data needs to be recovered. In this way, when the client device determines that data of an object needs to be recovered, data recovery can be performed using the method provided in this application. Therefore, this possible design can improve user experience.

In another possible design scheme, the recovering the data of the target object based on the data stored at the first storage address in the first snapshot includes: detecting whether the data stored at the first storage address in the first snapshot is infected with a virus or under a malicious attack; and when it is determined that the data stored at the first storage address in the first snapshot is not infected with a virus or under a malicious attack, determining the data stored at the first storage address in the first snapshot as recovered data of the target object. According to this possible design, security of the data used for recovering the data of the target object can be ensured.

In another possible design scheme, the method further includes: updating, based on an identifier of the target object and the first storage address, the first mapping relationship set currently maintained by the storage system.

In another possible design scheme, the method further includes: when it is determined that the data stored at the first storage address in the first snapshot is infected with a virus or under a malicious attack, determining, based on the first mapping relationship set associated with a second snapshot, a second storage address at which the data block of the target object is stored in the second snapshot; and recovering the data of the target object based on data stored at the second storage address in the second snapshot. The second snapshot is a snapshot obtained by performing a snapshot operation on the storage system at a second time prior to the first time, and the first mapping relationship set associated with the second snapshot includes a correspondence between an object maintained by the storage system and a storage address of a data block of the object as of the second time. According to this possible design, when the data used for recovering the data of the target object is insecure, the data of the target object is further recovered by using a previous snapshot.

In another possible design scheme, before the determining, based on the first mapping relationship set associated with the first snapshot, the first storage address at which the data block of the target object is stored in the first snapshot, the method further includes: performing at least one snapshot operation on the data in the storage system to obtain at least one snapshot, where the first snapshot is one of the at least one snapshot.

In another possible design scheme, the performing at least one snapshot operation on the data in the storage system to obtain at least one snapshot includes: periodically performing a snapshot operation on the data in the storage system to obtain at least one snapshot.

In another possible design scheme, the first snapshot is a snapshot obtained by performing the most recent snapshot operation on the data in the storage system prior to the current moment.

In another possible design scheme, the target object is a file or a database/table.

In another possible design scheme, the storage address is represented by a logical block address (logical block address, LBA) and an identifier (identifier, ID) of an LUN or a storage volume to which the LBA belongs, or the storage address is represented by a physical block address (physical block address, PBA) and an ID of an LUN or a storage volume to which the PBA belongs.

In another possible design scheme, the snapshot is a snapshot obtained by performing a snapshot operation on the data in the storage system at a granularity of an LUN or a storage volume.

In another possible design scheme, the storage system is a system that stores data based on a storage area network (storage area network, SAN). Alternatively, the storage system is a direct-attached storage (direct-attached storage, DAS) system.

According to a second aspect, this application provides a data recovery method. The method is applied to a client device that accesses a storage system, and the storage system stores data in a block-level storage manner. The method includes: generating an IO request indicating to perform a write operation on data of a first object, where the IO request includes an identifier of the first object, and the data of the first object is any type of semantic-level data; and sending the IO request to a storage system, where the identifier of the first object carried in the IO request is used to update a first mapping relationship set. The first mapping relationship set includes a correspondence between an object and a storage address of data of the object, and the first mapping relationship set is used to determine, when the data of the first object is recovered, a storage address of recovered data of the first object in a snapshot, where the snapshot refers to a snapshot obtained by performing a snapshot operation on data in the storage system. The identifier of the object is carried in the IO request, so that the first mapping relationship set that is maintained by the storage system and that is used for data recovery at a granularity of semantic-level data can be updated.

In a possible design scheme, the method further includes: receiving a first recovery request sent by the storage system, where the first recovery request includes the identifier of the first object, and the first recovery request is used to determine whether to recover the data of the first object; and returning an acknowledgment message to the storage system when it is determined to recover the data of the first object, where the acknowledgment message indicates to recover the data of the first object.

In another possible design scheme, the receiving the first recovery request sent by the storage system includes: receiving, through a preset protocol interface, the first recovery request sent by the storage system. The returning the acknowledgment message to the storage system includes: sending the acknowledgment message to the storage system through a preset protocol interface.

In another possible design scheme, the returning the acknowledgment message to the storage system when it is determined to recover the data of the first object includes: querying a third mapping relationship set based on the identifier of the first object carried in the first recovery request, to determine the first object, where the third mapping relationship set is used to record a correspondence between an identifier of an object and the object; outputting alarm information, where the alarm information indicates that the data of the first object is infected with a virus or under a malicious attack; and returning the acknowledgment message to the storage system in response to a first recovery indication input by the user based on the alarm information, where the first recovery indication indicates to recover the data of the first object.

In another possible design scheme, before the querying the third mapping relationship set based on the identifier of the first object carried in the first recovery request, the method further includes: determining the identifier of the first object; and updating the third mapping relationship set based on the identifier of the first object.

In another possible design scheme, the method further includes: sending a second recovery request to the storage system, where the second recovery request includes the identifier of the first object, and the second recovery request is used to request to recover the data of the first object.

In another possible design scheme, the storage address is represented by an LBA and an ID of an LUN or a storage volume to which the LBA belongs, or the storage address is represented by a PBA and an ID of an LUN or a storage volume to which the PBA belongs.

In another possible design scheme, the first object is a file or a database/table.

In another possible design scheme, the snapshot is a snapshot obtained by performing a snapshot operation on the data in the storage system at a granularity of an LUN or a storage volume.

In another possible design scheme, the storage system is a data storage system based on a SAN, or the storage system is a DAS storage system.

It may be understood that for descriptions of beneficial effects of the solutions provided in the second aspect or any possible design scheme of the second aspect, refer to the descriptions of beneficial effects of the solutions provided in the first aspect or any possible design scheme of the first aspect. Details are not described again.

According to a third aspect, this application provides a data recovery apparatus. The data recovery apparatus is configured to perform any method provided in the first aspect. In this application, the data recovery apparatus may be divided into functional modules according to any method provided in the first aspect. For example, each functional module may be obtained through division based on each corresponding function, or two or more functions may be integrated into one processing module. For example, in this application, the data recovery apparatus may be divided into a determining unit, a recovery unit, and the like based on functions. For descriptions of possible technical solutions executed by the foregoing divided functional modules and beneficial effects of the technical solutions, refer to the solutions provided in the first aspect or any possible design scheme of the first aspect. Details are not described herein again.

According to a fourth aspect, this application provides a data recovery apparatus. The data recovery apparatus is configured to perform any method provided in the second aspect. In this application, the data recovery apparatus may be divided into functional modules according to any method provided in the second aspect. For example, each functional module may be obtained through division based on each corresponding function, or two or more functions may be integrated into one processing module. For example, in this application, the data recovery apparatus may be divided into a generation unit, a sending unit, and the like based on functions. For descriptions of possible technical solutions executed by the foregoing divided functional modules and beneficial effects of the technical solutions, refer to the solutions provided in the second aspect or any possible design scheme of the second aspect. Details are not described herein again.

According to a fifth aspect, this application provides a data recovery apparatus. The data recovery apparatus is configured to perform any method provided in the first aspect or the second aspect. In this application, the data recovery apparatus may be divided into functional modules according to any method provided in the first aspect or the second aspect. For example, each functional module may be obtained through division based on each corresponding function, or two or more functions may be integrated into one processing module. For example, in this application, the data recovery apparatus may be divided into a transceiver unit, a processing unit, and the like based on functions. For descriptions of possible technical solutions executed by the foregoing divided functional modules and beneficial effects of the technical solutions, refer to the solutions provided in any possible design scheme of the first aspect or the second aspect. Details are not described herein again.

According to a sixth aspect, this application provides a data recovery system. The system includes a client device and a storage system. The storage system is configured to perform the method provided in the first aspect or any possible design scheme of the first aspect, and the client device is configured to perform the method provided in the second aspect or any possible design scheme of the second aspect.

According to a seventh aspect, this application provides a compute device. The compute device includes a memory, a network interface, and one or more processors. The one or more processors receive or send data through the network interface. The one or more processors are configured to read program instructions stored in the memory, to perform the method provided in the first aspect or any possible design scheme of the first aspect, or perform the method provided in the second aspect or any possible design scheme of the second aspect.

According to an eighth aspect, this application provides a data recovery method. The method includes: A client device determines a target object whose data needs to be recovered; queries a second mapping relationship set based on an object tag of the target object, to determine a storage address of a data block of the target object, that is, a target storage address; and sends a data recovery indication including the target storage address to a storage system, where the data recovery indication indicates to recover the data of the target object based on the target storage address. The target object is any type of semantic-level data, the data block of the target object is stored in the storage system in a block-level manner, and the storage system stores data in a block-level storage manner. The second mapping relationship set includes a correspondence between an object maintained by the client device and a storage address of a data block of the object in the storage system.

In a storage system that stores data in a block-level storage manner, the method provided in this application is performed by a client device of the storage system, so that the storage system can be indicated to perform data recovery at a granularity of semantic-level data (that is, an object). Compared with data recovery at a granularity of an LUN or a volume, data recovery using the method provided in this application is at a fine granularity, achieving fast and efficient data recovery. In addition, for a SAN storage system that stores data in the form of data blocks, ransomware detection and recovery at a data block level can be implemented in current academic research. However, the SAN storage system has no file system structure, and files with semantic information, instead of data blocks, are presented on the user side of the SAN storage system, and one file typically corresponds to multiple data blocks. Therefore, data recovery at a granularity of a data block may cause loss of file information displayed on the user side. For example, a ransomware-laced file on the user side corresponds to 10 data blocks in the storage system. If the storage system detects and recovers nine data blocks but misses one data block, the ransomware-laced file may still be unavailable on the user side. However, according to the method provided in this application, data is recovered at a granularity of semantic-level data (that is, an object), addressing the problem of possible loss of file information displayed on the user side that may occur when data is recovered at a granularity of a data block in academic research.

In a possible design scheme, the method further includes: The storage system receives a data recovery indication including a target storage address sent by the client device; and recovers the data of the target object based on data stored at the target storage address in a first snapshot. The first snapshot is a snapshot obtained by performing a snapshot operation on the data in the storage system at a first time.

According to this possible design, the storage system responds to the data recovery indication of the client device, so that data recovery can be implemented at a granularity of semantic-level data (that is, an object).

In another possible design scheme, the method further includes: The storage system detects whether the data stored in the storage system is infected with a virus or under a malicious attack; and sends a storage address of an abnormal data block to the client device. The abnormal data block is a data block in which data infected with a virus or under a malicious attack is located. That the client device determines the target object whose data needs to be recovered includes: The client device receives the storage address of the abnormal data block sent by the storage system; queries the second mapping relationship set based on the storage address of the abnormal data block, to determine an abnormal object; and determines the target object in the abnormal object.

According to this possible design, data of an object to which data in the storage system infected with a virus or under a malicious attack belongs can be recovered. For example, data of objects to which all data in the storage system infected with a virus or under a malicious attack belongs can be recovered. For another example, data of an object to which data with high hotness among data in the storage system infected with a virus or under a malicious attack belongs can be recovered. For another example, by increasing interaction between a user and a client device, data of an object to which data specified by the user among data in the storage system infected with a virus or under a malicious attack belongs can be recovered. In this case, the user participates in determining the target object whose data needs to be recovered, improving user participation in the solution implementation process. For data that the user deems unimportant among data infected with a virus or under a malicious attack, the user indicates that the data does not need to be recovered, reducing occupation of computing resources of the control module while ensuring user satisfaction.

In still another possible design scheme, that the client device determines the target object whose data needs to be recovered includes: The client device determines the target object in response to a received object recovery indication. The object recovery indication includes an object identifier of the target object.

According to this possible design, data of an object specified by the user can be recovered.

In still another possible design scheme, that the storage system recovers the data of the target object based on the data stored at the target storage address in the first snapshot includes: The storage system detects whether the data stored at the target storage address in the first snapshot is infected with a virus or under a malicious attack; and when it is determined that the data stored at the target storage address in the first snapshot is not infected with a virus or under a malicious attack, determines the data stored at the target storage address in the first snapshot as recovered data of the target object.

In still another possible design scheme, the method further includes: When it is determined that the data stored at the target storage address in the first snapshot is infected with a virus or under a malicious attack, the storage system recovers the data of the target object based on data stored at the target storage address in a second snapshot. The second snapshot is a snapshot obtained by performing a snapshot operation on the storage system at a second time prior to the first time.

In the foregoing two possible design schemes, when the data used for recovering the data of the target object is insecure, the data of the target object is further recovered by using a previous snapshot, ensuring security of recovered data.

In still another possible design scheme, the target object is a file or a database/table.

In still another possible design scheme, the storage address is represented by an LBA and an ID of an LUN or a storage volume to which the LBA belongs, or the storage address is represented by a PBA and an ID of an LUN or a storage volume to which the PBA belongs.

In still another possible design scheme, the snapshot is a snapshot obtained by performing a snapshot operation on the data in the storage system at a granularity of an LUN or a storage volume.

In still another possible design scheme, the storage system is a data storage system based on a SAN, or the storage system is a DAS storage system.

According to a ninth aspect, this application provides a data recovery system. The data recovery system includes a client device and a storage system. The client device is configured to: determine a target object whose data needs to be recovered; query a second mapping relationship set based on an object tag of the target object, to determine a storage address of a data block of the target object, that is, a target storage address; and send a data recovery indication including the target storage address to the storage system, where the data recovery indication indicates to recover the data of the target object based on the target storage address. The target object is any type of semantic-level data, the data block of the target object is stored in the storage system in a block-level manner, and the storage system stores data in a block-level storage manner. The second mapping relationship set includes a correspondence between an object maintained by the client device and a storage address of a data block of the object in the storage system.

In a possible design scheme, the storage system is configured to: receive the data recovery indication including the target storage address sent by the client device; and recover the data of the target object based on data stored at the target storage address in a first snapshot. The first snapshot is a snapshot obtained by performing a snapshot operation on the data in the storage system at a first time.

In another possible design scheme, the storage system is further configured to: detect whether the data stored in the storage system is infected with a virus or under a malicious attack; and send a storage address of an abnormal data block to the client device. The abnormal data block is a data block in which data infected with a virus or under a malicious attack is located. The client device is specifically configured to: receive the storage address of the abnormal data block sent by the storage system; query the second mapping relationship set based on the storage address of the abnormal data block, to determine an abnormal object; and determine the target object in the abnormal object.

In still another possible design scheme, the client device is specifically configured to determine the target object in response to a received object recovery indication. The object recovery indication includes an object identifier of the target object.

In still another possible design scheme, the storage system is specifically configured to: detect whether the data stored at the target storage address in the first snapshot is infected with a virus or under a malicious attack; and when it is determined that the data stored at the target storage address in the first snapshot is not infected with a virus or under a malicious attack, determine the data stored at the target storage address in the first snapshot as recovered data of the target object.

In still another possible design scheme, the storage system is further configured to: when it is determined that the data stored at the target storage address in the first snapshot is infected with a virus or under a malicious attack, recover the data of the target object based on data stored at the target storage address in a second snapshot. The second snapshot is a snapshot obtained by performing a snapshot operation on the storage system at a second time prior to the first time.

In still another possible design scheme, the target object is a file or a database/table.

In still another possible design scheme, the storage address is represented by an LBA and an ID of an LUN or a storage volume to which the LBA belongs, or the storage address is represented by a PBA and an ID of an LUN or a storage volume to which the PBA belongs.

In still another possible design scheme, the snapshot is a snapshot obtained by performing a snapshot operation on the data in the storage system at a granularity of an LUN or a storage volume.

In still another possible design scheme, the storage system is a data storage system based on a SAN, or the storage system is a DAS storage system.

It may be understood that for descriptions of beneficial effects of the solutions provided in the ninth aspect or any possible design scheme of the ninth aspect, refer to the descriptions of beneficial effects of the solutions provided in the eighth aspect or any possible design scheme of the eighth aspect. Details are not described again.

According to a tenth aspect, this application provides a computer-readable storage medium. The computer-readable storage medium is a non-volatile computer-readable storage medium, the computer-readable storage medium includes computer program instructions, and when the computer program instructions are executed by a compute device or a processor, the compute device or the processor performs the method provided in the first aspect or any possible design scheme of the first aspect, or performs the method provided in the second aspect or any possible design scheme of the second aspect, or performs the method provided in the eighth aspect or any possible design scheme of the eighth aspect.

According to an eleventh aspect, this application provides a computer program product including instructions. When the instructions are run by a compute device or a processor, the compute device or the processor is caused to perform the method provided in the first aspect or any possible design scheme of the first aspect, or perform the method provided in the second aspect or any possible design scheme of the second aspect, or perform the method provided in the eighth aspect or any possible design scheme of the eighth aspect.

According to a twelfth aspect, this application provides a chip. The chip includes a processor configured to run program instructions or code, and the chip or a device including the chip may be configured to perform the method provided in the first aspect or any possible design scheme of the first aspect, or the chip or a device including the chip is configured to perform the method provided in the second aspect or any possible design scheme of the second aspect, or the chip or a device including the chip may be configured to perform the method provided in the eighth aspect or any possible design scheme of the eighth aspect. For example, the chip further includes an input interface, an output interface, and a memory. The input interface, the output interface, the processor, and the memory of the chip are connected through an internal connection path of the chip. The memory in the chip is configured to store program instructions or code run by the processor. The input interface and the output interface of the chip are configured to connect and communicate with another chip or device.

It may be understood that any data recovery apparatus, data recovery system, compute device, computer-readable storage medium, computer program product, chip, or the like provided above may be used in a corresponding method provided above. Therefore, for beneficial effects that can be achieved, refer to the beneficial effects in the corresponding method. Details are not described herein again.

In this application, names of the data recovery apparatus, the data recovery system, and the like do not constitute any limitation on devices or functional modules. In actual application, these devices or functional modules may be known by other names. Devices or functional modules fall within the protection scope of this application, provided that functions of the devices or functional modules are similar to that described in this application.

### BRIEF DESCRIPTION OF DRAWINGS

FIG. 1 is a diagram of an implementation environment of a method according to an embodiment of this application;
FIG. 2 is another diagram of an implementation environment of a method according to an embodiment of this application;
FIG. 3 is a diagram of a process of a method for maintaining a first mapping relationship set according to an embodiment of this application;
FIG. 4a to FIG. 4f are a diagram of updating a first mapping relationship set according to an embodiment of this application;
FIG. 5 is a schematic flowchart of a data recovery method according to an embodiment of this application;
FIG. 6 is a schematic flowchart of another data recovery method according to an embodiment of this application;
FIG. 7 is another schematic flowchart of a data recovery method according to an embodiment of this application;
FIG. 8 is a schematic flowchart of another data recovery method according to an embodiment of this application;
FIG. 9 is a diagram of a process in which a client device determines, based on an abnormal data block in a storage system, a target object whose data needs to be recovered according to an embodiment of this application;
FIG. 10 is still another schematic flowchart of a data recovery method according to an embodiment of this application;
FIG. 11 is a diagram of a structure of a data recovery apparatus according to an embodiment of this application;
FIG. 12 is a diagram of a structure of another data recovery apparatus according to an embodiment of this application;
FIG. 13 is a diagram of a structure of still another data recovery apparatus according to an embodiment of this application;
FIG. 14 is a diagram of a structure of a compute device according to an embodiment of this application; and
FIG. 15 is a diagram of a structure of a data recovery system according to an embodiment of this application.

### DESCRIPTION OF EMBODIMENTS

To make the objectives, technical solutions, and advantages of this application clearer, the following further describes the implementations of this application in detail with reference to the accompanying drawings.

For ease of understanding, the following first explains technologies and background in embodiments of this application.

### (1) Ransomware

The ransomware is malware that incorporates various strong encryption algorithms, which encrypts key data of a victim and makes the data unavailable, or locks a compute device of a victim and makes the compute device unavailable. In addition, the attacker of the ransomware threatens to keep the data of the victim encrypted or the device of the victim locked. The attacker may possibly decrypt the data or resume access to the compute device only after a ransom is paid by the victim to the attacker. Ransomware that restricts users from normally accessing files and demands ransoms from users has become prevalent in recent years, turning out to be one of the fastest-growing network threats.

Ransomware propagates in the form of emails, Trojan programs, and web page vulnerabilities. A ransomware detection technology identifies a behavior pattern of ransomware and detects the ransomware in time when the ransomware encrypts data, preventing more data from being maliciously encrypted.

### (2) Logical unit number (logical unit number, LUN)

In a storage area network (storage area network, SAN), an LUN is a number used to identify a logical unit, which is a device addressed through a small computer system interface (small computer system interface, SCSI). In other words, a storage system partitions a physical hard disk into parts with logical addresses, which are then made accessible to a host. Such a partition is referred to as an LUN. Generally, the LUN is a logical disk created on a SAN storage system.

### (3) Storage volume (volume)

A directory bound to a container on a container host is referred to as a storage volume.

The storage volume is a file or directory in essence, which can bypass the default union file system and directly exist on the host of the container as a file or directory. Specifically, a storage volume establishes a binding relationship between a directory in the local file system of the container host and a directory in the file system in the container. Therefore, when data is written into the directory in the container, the container directly writes the data into the directory on the host having the binding relationship with the container.

### (4) Logical block address (logical block address, LBA) and physical block address (physical block address, PBA)

The LBA is a common mechanism used by a data storage apparatus to specify a location of data. One of the most common apparatuses that uses this mechanism is a hard disk. The LBA may refer to an address of a data block or a data block pointed to by an address. The PBA refers to a physical address on a hard disk or a physical block pointed to by a physical address.

On a hard disk drive (hard disk drive, HDD), data on the HDD can be directly overwritten. Therefore, LBAs and PBAs are in one-to-one correspondence. However, on a solid state drive (solid state drive, SSD), a storage medium used by the SSD is characterized by erase before write, read/write in pages, and erase in data blocks (including multiple pages). Therefore, a relationship between the LBA and the PBA is not fixed. Therefore, the SSD needs a flash translation layer (flash translation layer, FTL) for conversion between the LBA and the PBA, to adapt to an existing file system. The FTL is used to implement translation (or referred to as mapping (mapping)) from a logical address space of a host to a physical address space of a flash memory (flash) at the flash translation layer.

### (5) Snapshot (snapshot)

A snapshot is a copy of data stored in a disk/volume/storage unit.

When a snapshot operation is performed on a disk/volume/storage unit to obtain a snapshot of the disk/volume/storage unit, no copying is involved. Therefore, the snapshot operation can be completed in a very short time even for a large amount of data. For example, a snapshot operation is performed on a disk at a moment 1 to obtain a snapshot 1 of disk data. The disk system does not need to copy the data in the disk, but only needs to notify the disk to retain all disk blocks storing data, and the retained disk blocks are not allowed to be overwritten. Therefore, when any modification, addition, or deletion action is performed on the data in the disk subsequently, the disk block where the original data is located is not overwritten, instead, the modified part is written into another free and available disk block in the disk. In this way, the data stored in the foregoing retained disk blocks may be referred to as the snapshot 1 of the disk system at the moment 1.

Currently, for a SAN storage system, after the storage system performs ransomware detection, in one technical solution, data is recovered by rolling back an LUN or a volume where data infected with ransomware is located. The granularity of an LUN or a volume is coarse-grained, resulting in slow and inefficient data recovery. In addition, during the rollback of the LUN or the volume, normal data not infected with a virus in the LUN or the volume is rolled back together, causing loss of normal data. In another technical solution, a backup copy is created for the data of the SAN storage system, so that after detecting ransomware, the storage system recovers data based on the backup copy. However, this approach brings extra storage costs.

Based on this, an embodiment of this application provides a data recovery method. For a storage system that stores data in a block-level storage manner, the method implements data recovery at a granularity of semantic-level data. Compared with data recovery at a granularity of an LUN or a volume, data recovery using the method according to this embodiment of this application is at a fine granularity, achieving fast and efficient data recovery.

The semantic-level data refers to data having semantics that can be understood/recognized by a user. As an example, the semantic-level data includes but is not limited to a file (such as a document file or a worksheet file), a database, a data table, and the like. In embodiments of this application, one type of "semantic-level data" is referred to as an "object".

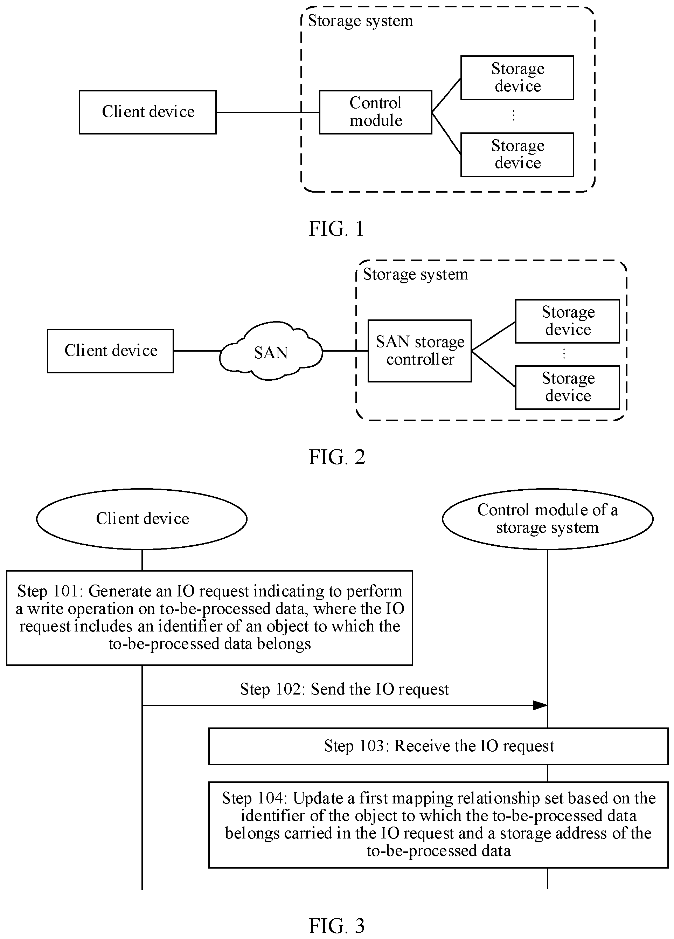

FIG. 1 is a diagram of an implementation environment of a method according to an embodiment of this application. As shown in FIG. 1, a storage system includes a control module and multiple storage devices. The control module communicates with a client device that accesses the storage system, and processes an input/output (input/output, IO) request from the client device. For example, the control module responds to the IO request from the client device and performs a read/write operation on data indicated in the IO request. For example, the control module writes, based on an indication of the IO request, data carried in the IO request into the storage device in the storage system. For another example, the control module modifies, based on an indication of the IO request, data stored in the storage device. For another example, the control module reads data from the storage device in the storage system based on an indication of the IO request.

When the data carried in the IO request from the client device or the user data stored in the storage device is infected with a virus (for example, ransomware) or is tampered with due to a malicious attack and needs to be recovered, or the data stored in the storage device needs to be recovered due to a misoperation of the user, the data recovery method provided in this embodiment of this application may be used to implement data recovery at a granularity of semantic-level data. Compared with data recovery at a granularity of an LUN or a volume, data recovery using the method according to this embodiment of this application is at a fine granularity, achieving fast and efficient data recovery.

The client device shown in FIG. 1 is any compute device (or referred to as a host) that can access the foregoing storage system. For example, the compute device includes but is not limited to terminal devices such as a general-purpose computer, a notebook computer, a tablet computer, an in-vehicle device, a mobile phone, or an artificial intelligence (artificial intelligence, AI) device that can access the storage system. For another example, the compute device includes but is not limited to devices having a network function, such as a server or a virtual machine that can access the storage system.

The storage device in the storage system shown in FIG. 1 may be implemented as a disk array, or may be implemented as a compute device including a disk or a disk array. This is not limited herein. For example, the disk array includes but is not limited to an HDD, a solid state drive (solid state drive, SSD), and the like.

The control module of the storage system shown in FIG. 1 may be any compute device having a computing processing capability or a functional module in the compute device. Optionally, the control module may be implemented by using another device independent of the storage device in the storage system, or functions implemented by the control module are implemented by at least one storage device in the storage system. This is not limited herein.

In an example, when the storage system shown in FIG. 1 is a direct-attached storage (direct-attached storage, DAS) system, the control module in the storage system is a storage server directly connected (for example, directly connected through a cable) to the storage device in the storage system. In another example, when the storage system shown in FIG. 1 is a SAN storage system, the control module in the storage system is a SAN storage controller, and the client device communicates with the SAN storage controller via the SAN network shown in FIG. 2. Optionally, the SAN network is implemented as a fiber-optic network, or is implemented as an Ethernet network (for example, a gigabit Ethernet network or a 10-gigabit Ethernet network). This is not limited herein.

In this embodiment of this application, in addition to a standard protocol interface used to transmit an IO request and a response message of the IO request, a communication protocol interface used to transmit an identifier of an object to which to-be-recovered data belongs is further configured for the client device that accesses the storage system and the control module of the storage system. The communication protocol interface is referred to as a preset protocol interface in the following. For detailed purposes of the preset protocol interface, refer to descriptions in the following method. Details are not described again.

It should be understood that the foregoing content is an example of the implementation environment of the data recovery method provided in this embodiment of this application, and does not constitute a limitation on the implementation environment of the data recovery method. A person of ordinary skill in the art may learn that, as a service requirement changes, the implementation environment of the method may be adjusted based on an application requirement, and enumeration thereof is not provided in this embodiment of this application.

An embodiment of this application further provides a data recovery system. The system includes the foregoing storage system and the client device that accesses the storage system. The method provided in embodiments of this application is applied to the data recovery system, and corresponding method steps are performed by the storage system and the client device. For detailed descriptions, refer to the following method descriptions. Details are not described again.

An embodiment of this application further provides a data recovery apparatus. The apparatus may be used in the control module of the foregoing storage system, and is configured to perform corresponding steps performed by the control module of the storage system in the method in embodiments of this application. The apparatus may be further used in the foregoing client device, and is configured to perform corresponding steps performed by the client device in the method in embodiments of this application. Optionally, the apparatus may be any compute device having a computing processing capability or a functional module in the compute device. For example, the compute device includes but is not limited to terminal devices such as a general-purpose computer, a notebook computer, a tablet computer, an in-vehicle device, a mobile phone, or an AI device. For another example, the compute device includes but is not limited to devices having a network function, such as a server.

The following describes an implementation process of the data recovery method provided in embodiments of this application.

First, when the data recovery method provided in embodiments of this application is implemented, when receiving an IO request from a client device, a control module of a storage system needs to record and update a correspondence between an object to which data that the IO request indicates to perform a write operation on belongs and a storage address of the data in the storage system. Alternatively, when the client device needs to write data into the storage system or modify or delete data stored in the storage system, the client device records and updates a correspondence between an object to which to-be-processed data belongs and a storage address of the to-be-processed data in the storage system. The to-be-processed data may be data to be written into the storage system, data used for modifying data stored in the storage system, or data stored in and to be deleted from the storage system. In embodiments of this application, an object to which data belongs refers to any type of semantic-level data. For example, the object to which the data belongs is a document file or a table file. This is not limited thereto.

In embodiments of this application, a set that is recorded and updated by the storage system and that includes at least one "correspondence between an object to which data that the IO request indicates to perform a write operation on belongs and a storage address of the data in the storage system" is referred to as a first mapping relationship set. In this case, when the control module of the storage system receives an IO request from the client device, a process of recording and updating the "correspondence between an object to which data that the IO request indicates to perform a write operation on belongs and a storage address of the data in the storage system" may also be understood as a process of maintaining/updating the first mapping relationship set by the control module of the storage system based on the IO request from the client device. In addition, in embodiments of this application, a set that is recorded and updated by the client device and that includes at least one "correspondence between an object to which to-be-processed data belongs and a storage address of the to-be-processed data in the storage system" is referred to as a second mapping relationship set. In this case, when the client device needs to write data into the storage system, or needs to delete/modify data stored in the storage system, a process of recording and updating the "correspondence between an object to which to-be-processed data belongs and a storage address of the to-be-processed data in the storage system" may also be understood as a process of maintaining/updating the second mapping relationship set by the client device based on the to-be-processed data.

Optionally, the first mapping relationship set and the second mapping relationship may be implemented as mapping relationship tables, relationship graphs, or the like. This is not limited herein.

FIG. 3 is a diagram of a process of a method for updating and maintaining a first mapping relationship set according to an embodiment of this application. Optionally, the method is applied to the implementation environment shown in FIG. 1 or FIG. 2, and corresponding steps are performed by the client device and the control module of the storage system in the implementation environment shown in FIG. 1 or FIG. 2. As shown in FIG. 3, the method includes the following steps.

Step 101: A client device generates an IO request indicating to perform a write operation on to-be-processed data, where the IO request includes an identifier of an object to which the to-be-processed data belongs.

The write operation includes at least one of a data write operation, a data delete operation, or a data modify operation. Specifically, the data write operation refers to an operation of writing data into a storage system, the data delete operation refers to an operation of deleting data from the storage system, and the data modify operation refers to an operation of modifying data stored in the storage system.

The identifier of the object to which the to-be-processed data belongs included in the IO request is used to uniquely identify the object, and is used to update the first mapping relationship set. The object to which the to-be-processed data belongs is any type of semantic-level data. For example, the object is a document file or a table file. This is not limited thereto. The first mapping relationship set includes a correspondence between an object and a storage address of a data block of the object in the storage system. The object refers to an object to which data that an IO request indicates to perform a write operation on belongs, and data of the object refers to the data on which the IO request to perform the write operation. In addition, when data of an object needs to be recovered, the first mapping relationship set can be used to determine a storage address (the first storage address, the second storage address, and the like described below) of a recovered data block of the object in a snapshot. The snapshot is a snapshot obtained by performing a snapshot operation on the data in the storage system.

For example, the to-be-processed data is first data, and the object to which the first data belongs is a first object. When the client device needs to generate an IO request for a write operation on the first data, the client device first determines an identifier of the first object. For example, the client device encodes metadata of the first object by using a preset algorithm, to obtain the identifier of the first object. The metadata of the first object includes but is not limited to a name, a size, an attribute, and the like of the first object, and the preset algorithm includes but is not limited to a hash (hash) algorithm. For another example, the client device encodes a file directory of the first object in the client device by using a preset algorithm, to obtain the identifier of the first object. For another example, the identifier of the first object is represented by the metadata of the first object. This is not limited thereto.

Further, the client device generates a corresponding IO request based on the write operation that needs to be performed on the first data and the identifier of the first object.

In an example, when the write operation performed on the first data is a data write operation, the client device obtains the first data that needs to be written into the storage system, determines the identifier of the first object, and generates a corresponding IO write request based on the first data and the identifier of the first object.

In some embodiments, a correspondence between an object and an object identifier is recorded in the client device. In embodiments of this application, a set that is recorded by the client device and that includes at least one "correspondence between an object and an object identifier" is referred to as a third mapping relationship set. Optionally, the third mapping relationship set may be implemented as a mapping relationship table, a relationship graph, or the like. This is not limited herein. It may be understood that the object in the correspondence may be represented as a name, a directory, metadata, or the like of the object. This is not limited thereto.

In this case, each time after determining an identifier of an object, the client device updates the third mapping relationship set based on the identifier of the object. For example, after determining the identifier of the first object, the client device updates the third mapping relationship set based on the identifier of the first object. Specifically, the client device may first traverse the third mapping relationship set based on the identifier of the first object. When the third mapping relationship set includes a correspondence including the identifier of the first object, the client device does not perform processing. When the third mapping relationship set does not include a correspondence including the identifier of the first object, the client device adds a correspondence to the third mapping relationship set, where the added correspondence is used to record the correspondence between the identifier of the first object and the first object. The first object in the added correspondence may be represented as a name, a directory, metadata, or the like of the first object. This is not limited thereto.

Step 102: The client device sends the IO request to the storage system.

For example, after generating the IO request, the client device sends the IO request to a control module of the storage system through a communication protocol interface between the client device and the control module of the storage system.

In an example, the storage system is a SAN storage system. After generating the IO request, the client device sends the IO request to a SAN storage controller through a communication protocol interface between the client device and the SAN storage controller and via a SAN network between the client device and the storage system.

Step 103: The control module of the storage system receives the IO request from the client device.

For example, the control module of the storage system receives the IO request from the client device through communication protocol interface between the control module and the client device.

In an example, the storage system is a SAN storage system. A SAN storage controller receives, through a communication protocol interface between the SAN storage controller and the client device, the IO request from the client device transmitted via a SAN network between the client device and the storage system.

Step 104: The control module of the storage system updates the first mapping relationship set based on the identifier of the object to which the to-be-processed data belongs carried in the IO request and a storage address of the to-be-processed data.

Specifically, after receiving the IO request, the control module first extracts, from the IO request, a processing operation type indicated by the IO request, and when it is determined that the processing operation type is a write operation, updates the first mapping relationship set based on the storage address of the to-be-processed data on which the IO request indicates to perform the write operation and the identifier of the object to which the to-be-processed data belongs carried in the IO request.

When the control module determines that the first mapping relationship set needs to be updated based on the identifier of the object to which the to-be-processed data belongs carried in the received IO request and the storage address of the to-be-processed data, the control module collects IO data of the IO request. For example, the to-be-processed data carried in the IO request is the first data, and the object to which the to-be-processed data carried in the IO request belongs is the first object. The IO data of the IO request collected by the control module includes: the identifier of the first object carried in the IO request, the storage address of the first data on which the IO request indicates to perform the write operation, a write operation type (that is, a data write operation, a data modify operation, or a data delete operation) indicated by the IO request, and an operation length of the write operation the IO request indicates to perform. Optionally, the IO data further includes a time of receiving the IO request.

The operation length of the write operation the IO request indicates to perform refers to a length of the first data on which the IO request indicates to perform the write operation. The storage address of the first data on which the IO request indicates to perform the write operation refers to an address at which the first data is stored in the storage device of the storage system, and the storage address may be represented by a PBA of a physical block storing the first data and an identifier (identifier, ID) of an LUN to which the PBA belongs or an ID of a storage volume to which the PBA belongs. Alternatively, the storage address may be represented by an LBA of a logical block storing the first data and an ID of an LUN to which the LBA belongs or an ID of a storage volume to which the LBA belongs. This is not limited herein. Generally, the PBA is represented by a start address of a physical block, the LBA is represented by a start address of a logical block, and the physical block and the logical block are generally of preset sizes.

The IO request sent by the client device to the control module carries the identifier of the first object, the write operation type indicated by the IO request, and the operation length of the write operation the IO request indicates to perform. In addition, when the IO request indicates to perform a data delete operation, optionally, the IO request sent by the client device to the control module carries the storage address of the first data on which the IO request indicates to perform the data deletion operation. Therefore, the control module may extract, from the received IO request, the identifier of the first object, the write operation type indicated by the IO request, the operation length of the write operation the IO request indicates to perform, and the storage address of the first data on which the IO request indicates to perform the write operation.

In addition, when the write operation indicated by the IO request is a data write operation, optionally, when the storage address (for example, the LBA) of the first data on which the IO request indicates to perform the write operation is specified by the client device, the IO request sent by the client device to the control module carries the storage address allocated by the client device for the first data. In response, the control module may extract the storage address of the first data from the received IO request. Optionally, when the storage address (for example, the LBA or the PBA) of the first data on which the IO request indicates to perform the write operation is specified by the storage system, the IO request sent by the client device to the control module does not carry the storage address of the first data that the IO request indicates to perform the write operation on. In this case, after receiving the IO request, the control module allocates a storage address for the first data on which the IO request indicates to perform the write operation, so that the control module obtains the storage address of the first data that the IO request indicates to perform the write operation on.

Further, the control module updates the first mapping relationship set based on the IO data collected based on the IO request. Specifically, the control module updates the first mapping relationship set based on the identifier of the first object and the storage address of the first data in the collected IO data.

In a case, based on the write operation type, included in the IO data, the IO request indicates to perform being a data write operation or a data modify operation, the control module adds the correspondence between the identifier of the first object and the storage address of the first data to the first mapping relationship set. In addition, the control module uses the operation length of the write operation the IO request included in the IO data indicates to perform as attribute information of the added correspondence between the identifier of the first object and the storage address of the first data. Optionally, the control module also uses the time of receiving the IO request included in the IO data as attribute information of the added correspondence between the identifier of the first object and the storage address of the first data. It may be understood that, when the storage system supports data modification through overwrite in-place, and the data length after modification is less than data length before modification, the control module does not need to update the first mapping relationship set based on the IO request indicating to perform the data modify operation.

In another case, based on the write operation type, included in the IO data, the IO request indicates to perform being a data delete operation, the control module searches the first mapping relationship set for the correspondence between the identifier of the first object and the storage address of the first data based on the identifier of the first object and the storage address of the first data included in the IO data, deletes the correspondence from the first mapping relationship set, and deletes attribute information of the correspondence.

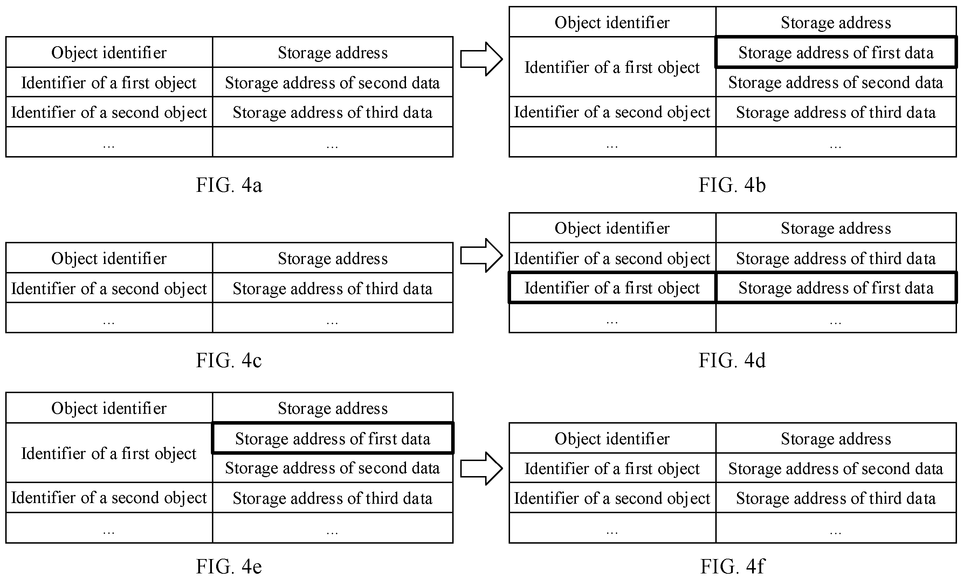

For example, the first mapping relationship set is implemented as a mapping relationship table, and the IO data collected by the control module based on the received IO request includes the identifier of the first object, the storage address of the first data on which the IO request indicates to perform the write operation, the write operation type the IO request indicates to perform, the operation length L of the write operation the IO request indicates to perform, and the time T of receiving the IO request. FIG. 4a to FIG. 4f are a diagram of updating the first mapping relationship set according to an embodiment of this application.

As shown in the table of FIG. 4a, the first mapping relationship set includes a correspondence between the identifier of the first object and a storage address of second data, and a correspondence between an identifier of a second object and a storage address of third data. Based on the write operation type, included in the IO data, the IO request indicates to perform being a data write operation, for example, when the control module determines, based on the IO data, that the IO request indicates to write the first data of the first object into the storage system, the control module adds the correspondence between the identifier of the first object and the storage address of the first data to the first mapping relationship set, and uses L and T as the attribute information of the added correspondence, to obtain the first mapping relationship set shown in the table of FIG. 4b (the attribute information of the correspondence is not shown in FIG. 4a to FIG. 4f). Alternatively, as shown in the table of FIG. 4c, the first mapping relationship set includes a correspondence between an identifier of a second object and a storage address of third data. Based on the write operation type, included in the IO data, the IO request indicates to perform being a data write operation, for example, when the control module determines, based on the IO data, that the IO request indicates to write the first data of the first object into the storage system, the control module adds the correspondence between the identifier of the first object and the storage address of the first data to the first mapping relationship set, and uses L and T as the attribute information of the added correspondence, to obtain the first mapping relationship set shown in the table of FIG. 4d.

As shown in the table of FIG. 4e, the first mapping relationship set includes a correspondence between the identifier of the first object and the storage address of the first data, a correspondence between the identifier of the first object and a storage address of second data, and a correspondence between an identifier of a second object and a storage address of third data. Based on the write operation type, included in the IO data, the IO request indicates to perform being a data delete operation, for example, when the control module determines, based on the IO data, that the IO request indicates to delete the first data of the first object from the storage system, the control module traverses the first mapping relationship set based on the identifier of the first object and the storage address of the first data included in the data, finds the correspondence between the identifier of the first object and the storage address of the first data in the first mapping relationship set, and deletes the correspondence and the attribute information of the correspondence, to obtain the first mapping relationship set shown in the table of FIG. 4f.

In this way, the storage system maintains and updates the first mapping relationship set based on the received IO request through step 101 to step 104. Further, the data recovery method provided in this embodiment of this application can be implemented based on the first mapping relationship set maintained by the storage system.

The following describes a process of implementing the data recovery method in embodiments of this application based on the first mapping relationship set maintained by the control module.

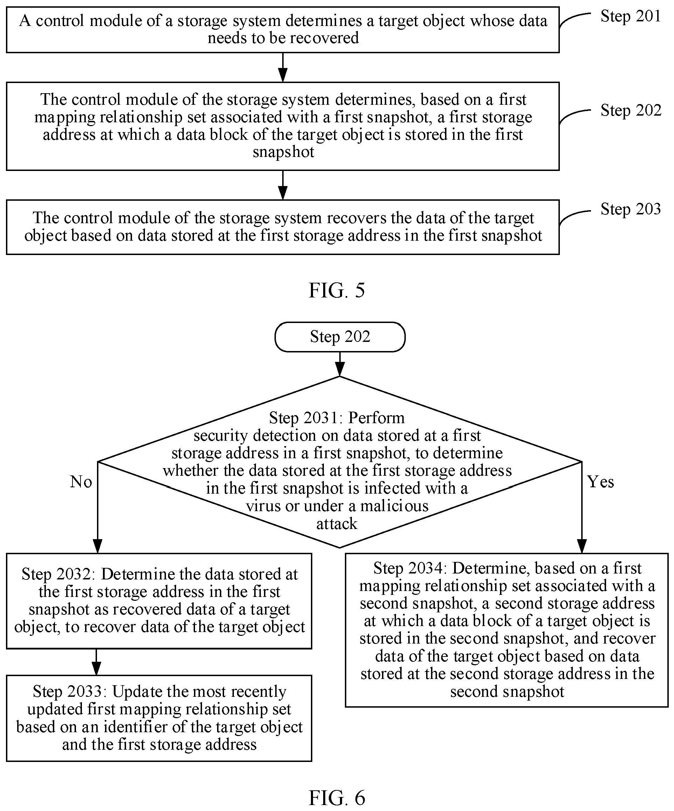

FIG. 5 is a schematic flowchart of a data recovery method according to an embodiment of this application. Optionally, the method is applied to the implementation environment shown in FIG. 1 or FIG. 2, and corresponding steps are performed by the client device and the control module of the storage system in the implementation environment shown in FIG. 1 or FIG. 2. As shown in FIG. 5, the method includes the following steps.

Step 201: A control module of a storage system determines a target object whose data needs to be recovered.

The data of the target object is any type of semantic-level data, and the storage system stores a data block of the target object in a block-level manner.

A process in which the control module determines the target object whose data needs to be recovered may be implemented in the following several manners.

Manner 1: The control module determines, based on an IO request from a client device, the target object whose data needs to be recovered.

After the control module receives any IO request from the client device, if the control module determines, based on the IO request, that a type of write operation to be performed on data as indicated by the IO request is a data write operation or a data modify operation, the control module performs security detection on to-be-written data carried in the IO request, and determines, based on a detection result, whether to determine an object to which the to-be-written data belongs as the target object whose data needs to be recovered. In this embodiment of this application, because the IO request received by the control module of the storage system carries an object identifier of the object to which the to-be-written data belongs, the object to which the to-be-written data belongs is an object represented by the object identifier carried in the IO request.

The following provides descriptions by using an example in which the IO request received by the control module indicates to perform a data write operation on first data (that is, the to-be-written data), and the first data is data of a first object represented by a first identifier. Such case indicates that the IO request carries the first identifier and the first data, and the IO request indicates to write the first data carried in the IO request into the storage system.

First, the control module performs security detection on the first data carried in the received IO request. For example, the control module detects whether the first data is infected with a virus (for example, ransomware) or under a malicious attack. Further, after the control module performs security detection on the first data carried in the IO request, the control module determines, based on an obtained detection result, whether the first data is infected with a virus or under a malicious attack. A process in which the control module detects whether the to-be-written data carried in the IO request is infected with a virus or under a malicious attack is not described in detail in this embodiment of this application.

It may be understood that writing the first data into a storage device of the storage system and performing security detection on the first data are not subject to a specific sequence in this embodiment of this application. For example, in the process of writing the first data into the storage device of the storage system, the control module simultaneously performs security detection on the first data. For another example, the control module first performs security detection on the first data, and writes the first data into the storage device of the storage system when it is determined, based on the detection result of the first data, that the first data is not infected with a virus or under a malicious attack, or discards the first data when it is determined, based on the detection result of the first data, that the first data is infected with a virus or under a malicious attack. In this case, the control module does not need to update a first mapping relationship set based on the IO request carrying the first data. For another example, the control module first writes the first data into the storage device of the storage system, and then performs security detection on the first data.

In a first possible implementation, when the control module determines, based on the detection result, that the first data carried in the IO request is infected with a virus or under a malicious attack, the control module determines the first object represented by the first identifier carried in the IO request as the target object.

In a second possible implementation, when the control module determines, based on the detection result, that the first data carried in the IO request is infected with a virus or under a malicious attack, the control module sends a first recovery request to the client device that sends the IO request, where the first recovery request includes the object identifier (that is, the identifier of the first object) carried in the IO request, and the first recovery request is used to determine whether the data of the first object needs to be recovered. For example, the control module sends the first recovery request to the client device through a preset protocol interface configured on the control module. When the first data carried in the IO request is infected with a virus or under a malicious attack, the object identifier carried in the IO request is also referred to as an abnormal object identifier.

In response, the client device receives the first recovery request. For example, the client device receives, through a preset protocol interface configured on the client device, the first recovery request sent by the control module. Then, the client device queries a third mapping relationship set based on the identifier of the first object carried in the first recovery request, to determine the first object, where the third mapping relationship set is used to record a correspondence between an object and an identifier of the object. For detailed descriptions of configuring the third mapping relationship set by the client device, refer to related descriptions in step 101.

After determining, by querying the third mapping relationship set, that the object represented by the identifier carried in the received first recovery request is the first object, the client device outputs alarm information, where the alarm information indicates that the data of the first object is infected with a virus or under a malicious attack, and is used to determine whether the data of the first object needs to be recovered. For example, the client device may output the alarm information through an output interface (such as an output interface being a display, a monitor, a speaker, or the like). Based on the alarm information output by the client device, the user may choose, based on a requirement of the user, whether to recover the data of the first object.

Further, the client device may receive a first recovery indication input by the user to the client device through an input interface (such as an input interface being a mouse, a keyboard, a touchscreen, a microphone, or the like) of the client device in response to the alarm information. When the first recovery indication received by the client device indicates that the data of the first object does not need to be recovered, the client device ends the data recovery procedure as a response. When the first recovery indication received by the client device indicates to recover the data of the first object, the client device returns an acknowledgment message to the control module in response to the first recovery indication input by the user based on the alarm information. For example, the client device returns the acknowledgment message to the control module through a preset protocol interface configured on the client device, where the acknowledgment message indicates to recover the data of the first object represented by the object identifier carried in the first recovery request. For example, the acknowledgment message may be a response message of the first recovery request. Optionally, the acknowledgment message carries the identifier of the first object.

In response, the control module receives the acknowledgment message returned by the client device. For example, the control module receives, through a preset protocol interface configured on the control module, the acknowledgment message returned by the client device. Further, the control module determines the first object as the target object in response to the acknowledgment message.

It should be understood that, in the second possible implementation, the user participates in determining the target object whose data needs to be recovered, improving user participation in the solution implementation process. For data that the user deems unimportant, the user indicates that the data does not need to be recovered, reducing occupation of computing resources of the control module while ensuring user satisfaction.

Manner 2: The control module detects a data block in the storage system, and determines, based on a detection result, the target object whose data needs to be recovered.

For example, the data block may be a data block (block) represented by a minimum storage unit used by the storage system for storing data, or may be a physical block including at least one block, or may be a logical block corresponding to a physical block. This is not limited herein.

Optionally, the control module may periodically perform security detection on the data block in the storage system, and determine, based on a detection result of each periodicity, the target object whose data needs to be recovered.

Optionally, the control module may periodically perform security detection on all data blocks or some data blocks in the storage system, and determine, based on a detection result of each periodicity, the target object whose data needs to be recovered. Data stored in the data blocks may be hot data stored in the storage system. This is not limited herein.

After the control module detects the data block stored in the storage system, and determines, based on the detection result, a target data block in the storage system infected with a virus or under a malicious attack, the control module queries the most recently updated first mapping relationship set based on a storage address of the target data block, to determine an object identifier corresponding to the storage address of the target data block. For detailed descriptions of the first mapping relationship set, refer to the descriptions of the method shown in FIG. 3. Details are not described again. In addition, a process in which the control module detects whether the data block in the storage system is infected with a virus or under a malicious attack is not described in detail in this embodiment of this application.

For example, the object identifier that is determined by the control module and corresponds to the storage address of the target data block is an identifier of a first object. In a possible implementation, the control module determines the first object represented by the identifier as the target object. In another possible implementation, the control module sends, to the client device, a first recovery request carrying the identifier of the first object, and when receiving an acknowledgment message returned by the client device indicating to recover the data of the first object, determines the first object as the target object. For a detailed process, refer to related descriptions in Manner 1. Details are not described again.

Manner 3: The control module determines, based on a second recovery request sent by the client device, the target object whose data needs to be recovered.

In this manner, when the user determines, based on a requirement of the user, that the data stored in the storage system needs to be recovered, the user inputs a second recovery indication to the client device through an input interface of the client device. The client device generates a second recovery request in response to the second recovery indication input by the user, and sends the second recovery request to the control module of the storage system. The second recovery request includes an object identifier of an object to which to-be-recovered data belongs, and requests to recover the data of the object.

As an example, when the user needs to recover first data mistakenly operated in a first object, the user inputs, to the client device through the input interface of the client device, the second recovery indication including an identifier of the first object. The client device generates the second recovery request including the identifier of the first object in response to the second recovery indication. Then, the client device sends the second recovery request to the control module through a preset protocol interface configured on the client device. In response, the control module receives, through a preset protocol interface configured on the control module, the second recovery request sent by the client device, and determines the first object represented by the object identifier carried in the second recovery request as the target object.

It should be noted that the foregoing several manners used to determine the target object whose data needs to be recovered are merely examples for description, and do not constitute a limitation on embodiments of this application.

Step 202: The control module of the storage system determines, based on the first mapping relationship set associated with a first snapshot, a first storage address at which the data block of the target object is stored in the first snapshot.

The first snapshot is a snapshot obtained by performing a snapshot operation on the data in the storage system at a first time. The process of snapshot taking is not described in detail in this embodiment of this application.

It should be understood that, during operation, the control module of the storage system performs at least one snapshot operation on the data in the storage system to obtain at least one snapshot, where the first snapshot is one of the at least one snapshot. In an example, during operation, the control module of the storage system periodically performs a snapshot operation on the data in the storage system to obtain at least one snapshot. A specific value of periodicity duration of the snapshot operation performed by the control module is not limited in this embodiment of this application. In another example, during operation, the control module of the storage system triggers at least one snapshot operation on the data in the storage system via a trigger condition to obtain at least one snapshot. An implementation form of the trigger condition is not specifically limited in this embodiment of this application. In still another example, during operation, the control module of the storage system periodically performs a snapshot operation on the data in the storage system and triggers a snapshot operation on the data in the storage system via a trigger condition to obtain at least one snapshot. This is not limited herein.

Optionally, the first snapshot is a snapshot obtained by the control module by performing the most recent snapshot operation on the data in the storage system prior to the current moment.

After the control module determines the target object whose data needs to be recovered, the control module determines, as the snapshot used for recovering the data of the target object, any historical snapshot obtained by performing a snapshot operation on the data in the storage system. For example, the control module determines, as the snapshot used for recovering the data of the target object, the first snapshot obtained by performing the most recent snapshot operation on the data in the storage system prior to the current moment.

After the control module determines that the first snapshot is the snapshot used for recovering the data of the target object, the control module determines, based on the first time at which the snapshot operation is performed to obtain the first snapshot, the first mapping relationship set associated with the first snapshot. The first mapping relationship set associated with the first snapshot is a first mapping relationship set most recently updated and maintained and persistently stored by the control module of the storage system as of the first time. In other words, the first mapping relationship set associated with the first snapshot includes a correspondence between an object maintained by a controller of the storage system and a storage address of a data block of the object as of the first time.

For example, the control module determines, based on a time recorded in attribute information of each correspondence in the currently updated first mapping relationship set, the first mapping relationship set associated with the first snapshot. The time recorded in the attribute information of each correspondence in the first mapping relationship set associated with the first snapshot includes the first time and a time prior to the first time.

For another example, the control module determines, as the first mapping relationship set associated with the first snapshot, the first mapping relationship set persistently stored at the first time or the first mapping relationship set having a same ID with the first snapshot. It should be understood that, in this embodiment of this application, optionally, each time the control module performs a snapshot operation on the data in the storage system to obtain a snapshot, the control module further persistently stores the most recently updated first mapping relationship set in a memory of the control module at the moment of performing the snapshot operation. In this case, the snapshot corresponds to the persistently stored first mapping relationship set. For example, the control module performs a snapshot operation on the data in the storage system at the first time to obtain a snapshot 1, and the control module persistently stores a copy of the first mapping relationship set most recently updated in the memory at the first time based on the received IO request. In this case, the persistently stored copy of the first mapping relationship set corresponds to the snapshot 1. Further, each time a snapshot is obtained, the control module associates the snapshot with a persistently stored first mapping relationship set that has a correspondence with the snapshot. The snapshot 1 and the persistently stored first mapping relationship set (denoted as a mapping relationship set 1) that has a correspondence with the snapshot 1 are used as an example. In an example, the control module associates the snapshot 1 with the mapping relationship set 1 based on the time of obtaining the snapshot 1 and the time recoded in the attribute information of the most recently updated correspondence in the mapping relationship set 1 (that is, the time of receiving the IO request in the IO data as described above). In another example, the control module separately marks the snapshot 1 and the mapping relationship set 1 with IDs having a binding relationship, to associate the snapshot 1 with the mapping relationship set 1, where the IDs having a binding relationship may be a same ID, or may be different IDs. This is not limited herein.

Then, the control module searches, based on an identifier of the target object, the first mapping relationship set associated with the first snapshot for a correspondence including the identifier of the target object, and determines a storage address in the correspondence as the first storage address at which the data block of the target object is stored in the first snapshot.

In an example, with reference to the table of FIG. 4a, when the target object is the first object, the control module searches, based on the identifier of the first object, the first mapping relationship set associated with the first snapshot as shown in the table of FIG. 4a for a correspondence including the identifier of the first object, and determines the storage address of the second data in the correspondence as the first storage address at which the data block of the target object is stored in the first snapshot. In other words, it indicates that the data of the target object stored in the storage system in the first snapshot is the second data of the target object.

In another example, with reference to the table of FIG. 4e, when the target object is the first object, the control module searches, based on the identifier of the first object, the first mapping relationship set associated with the first snapshot as shown in the table of FIG. 4e for a correspondence including the identifier of the first object, and determines the storage address of the first data and the storage address of the second data in the correspondence as the first storage address at which the data block of the target object is stored in the first snapshot. In other words, it indicates that the data of the target object stored in the storage system in the first snapshot includes the first data and the second data of the target object.

Step 203: The control module of the storage system recovers the data of the target object based on data stored at the first storage address in the first snapshot.

In a possible implementation, a process in which the control module recovers the data of the target object based on the data stored at the first storage address in the first snapshot may be implemented through step 2031 to step 2034 shown in FIG. 6.

Step 2031: The control module of the storage system performs security detection on the data stored at the first storage address in the first snapshot, to determine whether the data stored at the first storage address in the first snapshot is infected with a virus or under a malicious attack.

A specific implementation of the security detection performed by the control module is not limited in this embodiment of this application.

When the control module determines that the data stored at the first storage address in the first snapshot is not infected with a virus or under a malicious attack, the control module performs step 2032 to step 2033. When the control module determines that the data stored at the first storage address in the first snapshot is infected with a virus or under a malicious attack, the control module performs step 2034.

Step 2032: The control module of the storage system determines the data stored at the first storage address in the first snapshot as recovered data of the target object, to recover the data of the target object.

The control module determines target data stored at the first storage address in the first snapshot as the most recently recovered data of the target object, and deletes the data of the target object stored in the storage system after the first time (the time of performing the snapshot operation to obtain the first snapshot), to recover the data of the target object. A length of the target data is an operation length recorded in attribute information of a target correspondence (that is, the operation length in the IO data described above), where the target correspondence is a correspondence including the first storage address in the first mapping relationship set associated with the first snapshot.

For example, the target object is the first object, and the snapshot used for recovering the data of the first object is the first snapshot obtained by performing a snapshot operation at the first time. In this case, the first mapping relationship set associated with the first snapshot is the first mapping relationship set persistently stored at the first time, and is denoted as a mapping relationship set 1. In this case, when the control module determines, based on the mapping relationship set 1 shown in the table of FIG. 4f, that the first storage address at which the data of the target object is stored in the first snapshot includes only the storage address of the second data (denoted as an address 2), and the control module finds, based on the identifier of the first object, in the first mapping relationship set (denoted as a mapping relationship set 2) most recently updated as of the current moment and after the first time that the correspondence including the identifier of the first object includes: the identifier of the first object and the storage address of the second data (that is, the address 2), and the identifier of the first object and a storage address of fourth data (denoted as an address 4), it indicates that the control module writes the fourth data of the first object at the address 4 in the storage system after the first time. In this case, when the control module recovers the data of the first object based on the second data stored at the address 2 in the first snapshot, the control module determines the second data stored at the address 2 as recovered data of the first object, and deletes the fourth data stored at the address 4 in the storage system after the first time, to recover the data of the first object.

Step 2033: The control module of the storage system updates the most recently updated first mapping relationship set based on the identifier of the target object and the first storage address.

For example, the control module searches, based on the identifier of the target object, the most recently updated first mapping relationship set for a correspondence including the identifier of the target object, and deletes, from the correspondence including the identifier of the target object, a correspondence other than a correspondence between the identifier of the target object and the first storage address.

For example, the target object is the first object, and the snapshot used for recovering the data of the first object is the first snapshot obtained by performing a snapshot operation at the first time. In this case, the first mapping relationship set associated with the first snapshot is the first mapping relationship set persistently stored at the first time, and is denoted as a mapping relationship set 1. In this case, when the control module determines, based on the mapping relationship set 1 shown in the table of FIG. 4f, that the first storage address at which the data of the target object is stored in the first snapshot includes only the storage address of the second data (denoted as an address 2), and the control module finds, based on the identifier of the first object, in the first mapping relationship set (denoted as a mapping relationship set 2) most recently updated as of the current moment and after the first time that the correspondence including the identifier of the first object includes: the identifier of the first object and the storage address of the second data (that is, the address 2), and the identifier of the first object and a storage address of fourth data (denoted as an address 4), it indicates that the control module further writes the fourth data of the first object at the address 4 in the storage system after the first time, so that a correspondence between the identifier of the first object and the storage address of the fourth data is added to the first mapping relationship set in the memory. In this case, when or after the control module recovers the data of the first object based on the second data stored at the address 2 in the first snapshot, the control module deletes the correspondence between the identifier of the first object and the storage address of the fourth data recorded in the mapping relationship set 2, to update the mapping relationship set 2.

Step 2034: The control module of the storage system determines, based on the first mapping relationship set associated with a second snapshot, a second storage address at which the data block of the target object is stored in the second snapshot, and recovers the data of the target object based on data stored at the second storage address in the second snapshot.

The second snapshot is a snapshot obtained by performing a snapshot operation on the data in the storage system at a second time prior to the first time. For example, if the control module periodically performs a snapshot operation on the data in the storage system, and the control module obtains the first snapshot by performing a snapshot operation on the data in the storage system in the s^{th} periodicity, the second snapshot is a snapshot obtained by the control module by performing a snapshot operation on the data in the storage system in the (s-1)^{th} periodicity, where s is a positive integer greater than 1.

The first mapping relationship set associated with the second snapshot refers to a first mapping relationship set most recently updated and persistently stored by the control module of the storage system as of the second time. In other words, the first mapping relationship set associated with the second snapshot includes a correspondence between an object maintained by the control module of the storage system and a storage address of a data block of the object as of the second time.

Specifically, for a process in which the control module determines, based on the first mapping relationship set associated with the second snapshot, the second storage address at which the data block of the target object is stored in the second snapshot, refer to the descriptions of "the control module determines, based on the first mapping relationship set, the first storage address at which the data block of the target object is stored in the first snapshot" in step 202. Details are not described again.

Further, the control module performs security detection on the data stored at the second storage address in the second snapshot, and when it is determined that the data stored at the second storage address in the second snapshot is not infected with a virus or under a malicious attack, performs step 2032 to step 2033 for the second snapshot and the second storage address, to update the data of the target object; and when it is determined that the data stored at the second storage address in the second snapshot is infected with a virus or under a malicious attack, the control module performs step 2034 for the first mapping relationship set associated with a third snapshot and the third snapshot, so that the control module determines, based on the first mapping relationship set associated with the third snapshot, a third storage address at which the data block of the target object is stored in the third snapshot, and recovers the data of the target object based on data stored at the third storage address in the third snapshot. The control module repeats the process until the control module completes data recovery of the target object.

The third snapshot is a snapshot obtained by performing a snapshot operation on the data in the storage system at a third time prior to the second time. For example, if the control module periodically performs a snapshot operation on the data in the storage system, and the control module obtains the second snapshot by performing a snapshot operation on the data in the storage system in the (s-1)^{th} periodicity, the third snapshot is a snapshot obtained by the control module by performing a snapshot operation on the data in the storage system in the (s-2)^{th} periodicity.

The first mapping relationship set associated with the third snapshot refers to a first mapping relationship set most recently updated and persistently stored by the control module of the storage system as of the third time. In other words, the first mapping relationship set associated with the third snapshot includes a correspondence between an object maintained by control module of the storage system and a storage address of a data block of the object as of the third time.

In another possible implementation, the control module directly determines the data stored at the first storage address in the first snapshot as recovered data of the target object, and deletes the data of the target object stored in the storage system after the snapshot operation for obtaining the first snapshot (that is, after the first time), to recover the data of the target object. For a detailed process, refer to the descriptions in step 2032. Details are not described again. For example, when the control module determines, in Manner 3 in step 201, the target object whose data needs to be recovered, the data of the target object may be recovered in this possible implementation. In addition, the control module further updates the most recently updated first mapping relationship set in the memory based on the identifier of the target object and the first storage address. For a detailed process, refer to the descriptions in step 2033. Details are not described again.

In this way, by using the method described in step 201 to step 203, data recovery at a granularity of semantic-level data (that is, an object) is implemented in a storage system that stores data in a block-level storage manner. Compared with data recovery at a granularity of an LUN or a volume, data recovery using the method according to this embodiment of this application is at a fine granularity, achieving fast and efficient data recovery.

In addition, for a SAN storage system that stores data in the form of data blocks, ransomware detection and recovery at a data block level can be implemented in current academic research. However, the SAN storage system has no file system structure, and files with semantic information, instead of data blocks, are presented on the user side of the SAN storage system, and one file typically corresponds to multiple data blocks. Therefore, data recovery at a granularity of a data block may cause loss of file information displayed on the user side. For example, a ransomware-laced file on the user side corresponds to 10 data blocks in the storage system. If the storage system detects and recovers nine data blocks but misses one data block, the ransomware-laced file may still be unavailable on the user side. According to the method provided in this embodiment of this application, data is recovered at a granularity of semantic-level data (that is, an object), addressing the problem of possible loss of file information displayed on the user side that may occur when data is recovered at a granularity of a data block in academic research.

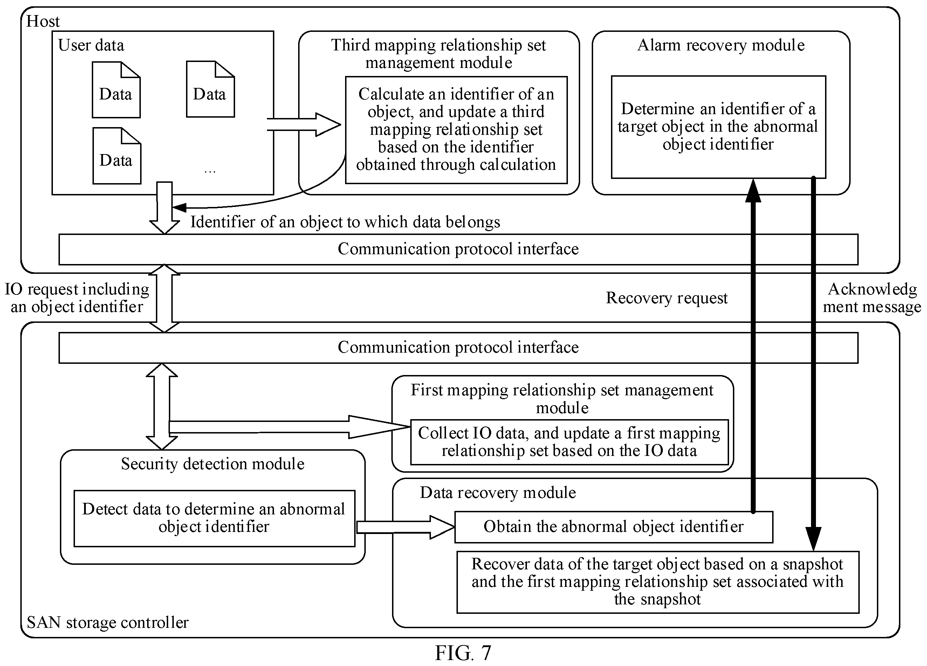

To deepen understanding of the data recovery method described in step 201 to step 203, the following further describes the method provided in this embodiment of this application with reference to examples. For example, the client device is a host, the storage system is a SAN storage system, and the controller of the storage system is a SAN storage controller. FIG. 7 is another schematic flowchart of a data recovery method according to an embodiment of this application.

As shown in FIG. 7, on the host side, the host includes a third mapping relationship set management module. The module is configured to calculate an identifier of an object to which user data that needs to be written into the SAN storage system belongs, and update a third mapping relationship set based on the identifier obtained through calculation. For detailed descriptions, refer to related descriptions of step 101. Details are not described again. On the SAN storage system side, the SAN storage controller includes a first mapping relationship set management module. The module is configured to collect IO data based on a received IO request, and update a first mapping relationship set based on the collected IO data. For detailed descriptions, refer to the foregoing descriptions of step 101 to step 104. Details are not described again.

On the SAN storage system side, the SAN storage controller further includes a security detection module and a data recovery module. The security detection module is configured to detect data to determine an abnormal object identifier. An object represented by the abnormal object identifier refers to an object to which data infected with a virus or under a malicious attack belong as indicated by a detection result obtained by detecting the data. The data recovery module is configured to obtain the abnormal object identifier, and send a recovery request including the abnormal object identifier (for example, a first recovery request including a first object identifier) to the host. For detailed descriptions of this process, refer to related descriptions of step 201. Details are not described again.

On the host side, the host further includes an alarm recovery module. The module is configured to determine an identifier of a target object from the abnormal object identifier received from the SAN storage controller, and return the identifier of the target object to the SAN storage controller by using an acknowledgment message. Further, the data recovery module of the SAN storage controller recovers data of the target object based on a historical snapshot obtained by performing a snapshot operation on the data in the SAN storage system and a first mapping relationship set associated with the snapshot. For a detailed process, refer to step 202 to step 203. Details are not described again.

The following describes a process in which a client device updates and maintains a second mapping relationship set.

Specifically, the client device updates the second mapping relationship set based on an object to which to-be-processed data belongs and a storage address of the to-be-processed data.

The to-be-processed data may be data to be written into a storage system, or data used for modifying data stored in the storage system, or data stored in and to be deleted from the storage system. The "object to which to-be-processed data belongs" refers to any type of semantic-level data. For example, the "object to which to-be-processed data belongs" is a document file or a table file. This is not limited thereto.

The storage address of the to-be-processed data may be a logical address of the to-be-processed data, and the logical address may be represented by, for example, an LBA of a logical block storing the to-be-processed data, an ID of an LUN to which the LBA belongs or an ID of a storage volume to which the LBA belongs, and a length of the to-be-processed data. Alternatively, the storage address of the to-be-processed data may be a physical address at which the to-be-processed data is stored in the storage system, and the physical address may be represented by, for example, a PBA of a physical block storing the to-be-processed data in the storage system, an ID of an LUN to which the PBA belongs or an ID of a storage volume to which the PBA belongs, and a length of the to-be-processed data. It should be understood that the LBA is represented by a start address of a logical block, the PBA is represented by a start address of a physical block, and the physical block and the logical block are generally of preset sizes.

The object to which the to-be-processed data belongs may be represented by an object tag of the object to which the to-be-processed data belongs. The object tag of the object to which the to-be-processed data belongs may be an object identifier (that is, the object identifier described above) of the object to which the to-be-processed data belongs, or may be a name, a directory, metadata, or the like of the object to which the to-be-processed data belongs. This is not limited. For a process of obtaining the object identifier of the object to which the to-be-processed data belongs, refer to related descriptions in step 101. Details are not described again. It may be understood that, when the object tag of the object to which the to-be-processed data belongs is the object identifier of the object to which the to-be-processed data belongs, the client device further maintains the foregoing third mapping relationship set, to record a correspondence between the object identifier of the object to which the to-be-processed data belongs and the object to which the to-be-processed data belongs.

In a first possible case, the to-be-processed data is data to be written into the storage system (denoted as to-be-written data). In this case, after the client device determines that the to-be-written data needs to be written into the storage system, the client device determines an object tag of an object to which the to-be-written data belongs (denoted as a to-be-written-object tag). In an example, when the object tag is the name, the directory, or the metadata of the object, the client device determines the name, the directory, or the metadata of the object to which the to-be-written data belongs as the to-be-written-object tag. In another example, when the object tag is the object identifier described above, the client device determines, through the related process described in step 101, the object identifier of the object to which the to-be-written data belongs, and uses the object identifier as the to-be-written-object tag. Details are not described again.

Optionally, when the storage address of the to-be-written data is specified by the client device, the client device allocates the storage address for the to-be-written data. In this case, the storage address is usually a logical address. Further, the client device updates the second mapping relationship set based on the determined to-be-written-object tag and the storage address allocated for the to-be-written data. For a detailed process of "the client device updates the second mapping relationship set based on the determined to-be-written-object tag and the storage address allocated for the to-be-written data", refer to the following descriptions of "the client device updates the second mapping relationship set based on the to-be-written-object tag and the storage address of the to-be-written data". Details are not described herein again.

Optionally, when the storage address of the to-be-written data is specified by the storage system, the client device generates, based on the to-be-written data, an IO request indicating to write the to-be-written data into the storage system, and sends the IO request to the storage system, where the IO request carries the to-be-written data. In response, the storage system receives the IO request, allocates the storage address for the to-be-written data carried in the IO request, and returns the storage address to the client device. In this case, the storage address may be a logical address or a physical address. This is not limited herein. Further, the client device updates the second mapping relationship set based on the determined to-be-written-object tag and the storage address received from the storage system and allocated for the to-be-written data. For a detailed process of "the client device updates the second mapping relationship set based on the determined to-be-written-object tag and the storage address received from the storage system and allocated for the to-be-written data", refer to the following descriptions of "the client device updates the second mapping relationship set based on the to-be-written-object tag and the storage address of the to-be-written data". Details are not described herein again.

In an example, that the client device updates the second mapping relationship set based on the to-be-written-object tag and the storage address of the to-be-written data includes: The client device first traverses the second mapping relationship set based on the to-be-written-object tag; and when it is determined that the second mapping relationship set includes the to-be-written-object tag, proceeds to determine whether a storage address that is in the second mapping relationship set and has a correspondence with the to-be-written-object tag includes the storage address of the to-be-written data. If the client device determines that the storage address that is in the second mapping relationship set and has a correspondence with the to-be-written-object tag includes the storage address of the to-be-written data, the process of updating the second mapping relationship set ends. If the client device determines that the storage address that is in the second mapping relationship set and has a correspondence with the to-be-written-object tag does not include the storage address of the to-be-written data, and the second mapping relationship set does not include the to-be-written-object tag, the client device adds a correspondence between the to-be-written-object tag and the storage address of the to-be-written data to the second mapping relationship set, to update the second mapping relationship set. An example in which the object tag is the object identifier is used. For an example of adding the correspondence between the to-be-written-object tag and the storage address of the to-be-written data to the second mapping relationship set, refer to the example of adding the correspondence between the identifier of the first object and the storage address of the first data to the first mapping relationship set shown in the table of FIG. 4a, to obtain the updated first mapping relationship set shown in the table of FIG. 4b.

In a second possible case, the to-be-processed data is data stored in and to be deleted from the storage system (denoted as to-be-deleted data). In this case, the storage address of the to-be-deleted data is known to the client device. In addition, after the client device determines that the to-be-deleted data needs to be deleted from the storage system, the client device determines an object tag of an object to which the to-be-deleted data belongs (denoted as a to-be-deleted-object tag). For detailed descriptions of determining the to-be-deleted-object tag by the client device, refer to the descriptions of determining the to-be-written-object tag by the client device in the first possible case. Details are not described again. Then, the client device traverses the second mapping relationship set based on the to-be-deleted-object tag, to search for the to-be-deleted-object tag included in the second mapping relationship set. Then, the client device deletes the storage address of the to-be-deleted data from the storage address included in the second mapping relationship set and having a correspondence with the to-be-deleted-object tag, to delete the correspondence between the to-be-deleted-object tag and the storage address of the to-be-deleted data. Optionally, after the client device deletes the storage address of the to-be-deleted data from the storage address included in the second mapping relationship set and having a correspondence with the to-be-deleted-object tag, the second mapping relationship set no longer includes the storage address having a correspondence with the to-be-deleted-object tag. In this case, the client device further deletes the to-be-deleted-object tag included in the second mapping relationship set. An example in which the object tag is the object identifier is used. For an example of deleting the correspondence between the to-be-deleted-object tag and the storage address of the to-be-deleted data from the second mapping relationship set, refer to the example of deleting the correspondence between the identifier of the first object and the storage address of the first data from the first mapping relationship set as shown in the table of FIG. 4e, to obtain the updated first mapping relationship set shown in the table of FIG. 4f.

In a third possible case, the to-be-processed data is modified data (denoted as post-modification data) of data stored in the storage system (denoted as pre-modification data). In this case, the storage address of the pre-modification data is known to the client device. In addition, after the client device determines that the "pre-modification data" stored in the storage system needs to be modified to the "post-modification data", the client device determines an object tag of an object to which the post-modification data belongs (denoted as a modified-object tag), and traverses the second mapping relationship set based on the modified-object tag, to search for the modified-object tag included in the second mapping relationship set. It should be understood that the modified-object tag included in the second mapping relationship set is an object tag determined based on the pre-modification data. It should be further understood that the pre-modification data and the post-modification data belong to the same object. Therefore, the object tag determined based on the pre-modification data is the same as the object tag determined based on the post-modification data. For detailed descriptions of determining the modified-object tag by the client device, refer to the descriptions of determining the object tag of the to-be-written object by the client device in the first possible case. Details are not described again.

Optionally, when the length of the post-modification data is less than the length of the pre-modification data, and the storage system configured to store the pre-modification data supports data modification through overwrite in-place, the client device modifies, in the storage address included in the second mapping relationship set and having a correspondence with the modified-object tag, the data length of the storage address of the pre-modification data. Specifically, the client device modifies, in the storage address included in the second mapping relationship set and having a correspondence with the modified-object tag, the data length of the storage address of the pre-modification data to the length of the post-modification data.

Optionally, when the length of the post-modification data is equal to the length of the pre-modification data, and the storage system configured to store the pre-modification data supports data modification through overwrite in-place, the client device ends the procedure of updating the second mapping relationship set.

Optionally, when the storage system configured to store the pre-modification data does not support data modification through overwrite in-place, the client device may first delete the pre-modification data stored in the storage system, and then write the post-modification data into the storage system. Alternatively, the client device may first write the post-modification data into the storage system, and then delete the pre-modification data stored in the storage system. In this case, the client device uses the pre-modification data as the to-be-deleted data in the second possible case, and updates the second mapping relationship set based on the to-be-deleted data. For detailed descriptions, refer to the descriptions in the second possible case. Details are not described again. The client device further uses the post-modification data as the to-be-written data in the first possible case, and updates the second mapping relationship set based on the to-be-written data. For detailed descriptions, refer to descriptions in the first possible case. Details are not described again.

Based on the foregoing process, the objective of updating and maintaining the second mapping relationship set by the client device can be implemented. Further, the data recovery method provided in this embodiment of this application can be implemented based on the second mapping relationship set updated and maintained by the client device.

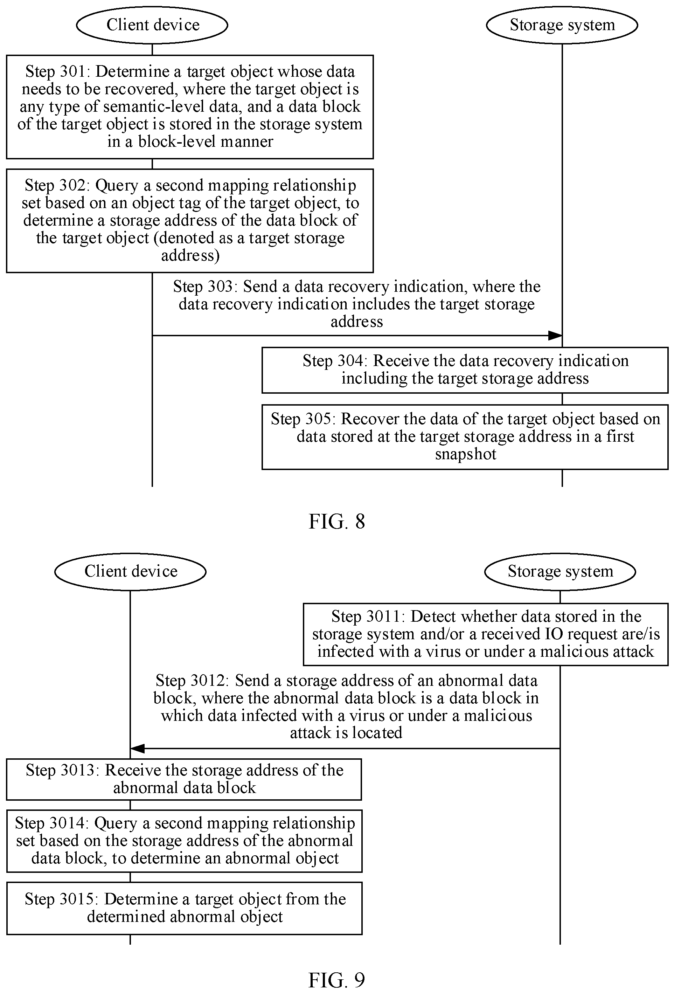

The following describes a process of implementing the data recovery method in embodiments of this application based on the second mapping relationship set maintained by the client device. FIG. 8 is a schematic flowchart of another data recovery method according to an embodiment of this application. Optionally, the method is applied to the implementation environment shown in FIG. 1 or FIG. 2, and corresponding steps are performed by the client device and the storage system in the implementation environment shown in FIG. 1 or FIG. 2. As shown in FIG. 8, the method includes the following step 301 to step 305.

Step 301: A client device determines a target object whose data needs to be recovered, where the target object is any type of semantic-level data, and a data block of the target object is stored in a storage system in a block-level manner;

The data of the target object is any type of semantic-level data, and the storage system stores a data block of the target object in a block-level manner.

A process in which the client device determines the target object whose data needs to be recovered may be implemented in the following several manners. It should be noted that the following several manners used to determine the target object whose data needs to be recovered are merely examples for description, and do not constitute a limitation on embodiments of this application.

Manner 1: The client device determines, in response to an object recovery indication input by a user, the target object whose data needs to be recovered.

In this manner, when the user determines, based on a requirement of the user, that the data stored in the storage system needs to be recovered, the user inputs an object recovery indication to the client device through an input interface of the client device, where object recovery indication includes an object identifier of an object (that is, the target object) whose data needs to be recovered. In response to the object recovery indication input by the user, the client device determines, as the target object, an object to which to-be-recovered data indicated by the object recovery indication belongs. In this case, there may be one or more target objects. This is not limited. It can be learned that the object recovery indication herein is the second recovery indication in step 201.

For example, when the user needs to recover first data mistakenly operated in a first object, the user inputs, to the client device through the input interface of the client device, the second recovery indication including an object tag of the first object. The client device determines the first object as the target object in response to the second recovery indication.

Manner 2: The client device determines, based on abnormal data block in the storage system, the target object whose data needs to be recovered.

FIG. 9 is a diagram of a process in which a client device determines, based on an abnormal data block in a storage system, a target object whose data needs to be recovered according to an embodiment of this application. Optionally, the process is applied to the implementation environment shown in FIG. 1 or FIG. 2, and corresponding steps are performed by the client device and the storage system in the implementation environment shown in FIG. 1 or FIG. 2. As shown in FIG. 9, the process includes the following step 3011 to step 3015.

Step 3011: A storage system detects whether data stored in the storage system and/or a received IO request are/is infected with a virus or under a malicious attack.

Specifically, that the storage system detects whether the data stored in the storage system is infected with a virus or under a malicious attack includes: The storage system performs security detection on a data block stored in the storage system, to determine whether the data is infected with a virus or under a malicious attack.

Optionally, the storage system may periodically perform security detection on a data block stored in the storage system, to periodically determine whether the data block stored in the storage system is infected with a virus or under a malicious attack.

Optionally, the storage system may periodically perform security detection on some or all data blocks stored in the storage system, to periodically determine whether these data blocks are infected with a virus or under a malicious attack. Data stored in the data blocks may be hot data stored in the storage system. This is not limited herein.

When the storage system periodically performs security detection on some or all data blocks stored in the storage system, in this embodiment of this application, the following step 3012 to step 3015 are performed for a detection result in each periodicity.

In addition, that the storage system detects whether the received IO request is infected with a virus or under a malicious attack includes: The storage system performs security detection on data carried in the received IO request, to determine whether the data is infected with a virus or under a malicious attack. Optionally, that the storage system detects whether the received IO request is infected with a virus or under a malicious attack further includes: The storage system detects a feature of the received IO request, to determine whether the IO request is a malicious IO request.

It should be understood that a process of detecting whether the data is infected with a virus or under a malicious attack is not described in detail, and a process of detecting whether the IO request is a malicious IO request is not described in detail in this embodiment of this application.

Step 3012: The storage system sends a storage address of an abnormal data block to a client device, where the abnormal data block is a data block in which data infected with a virus or under a malicious attack is located.

The abnormal data block is used by the client device to determine a target object. The storage address of the abnormal data block may be a logical address or a physical address of the abnormal data block. The following describes, by using Example 1 to Example 3, a process in which the storage system sends the storage address of the abnormal data block to the client device.

Example 1: When the storage system detects that one or more data blocks stored in the storage system are infected with a virus or under a malicious attack, the storage system determines the one or more data blocks infected with a virus or under a malicious attack as abnormal data blocks. In other words, there are one or more abnormal data blocks. Then, the storage system reads the storage address of each abnormal data block, and sends the storage address of each abnormal data block to the client device through a communication protocol interface between the storage system and the client device.

Example 2: When the storage system detects that first data carried in the received IO request is infected with a virus or under a malicious attack, if the storage address of the first data carried in the IO request is allocated by the client device, the IO request includes an ID of an LUN or a storage volume to which the first data belongs, a length of the first data, and an LBA allocated by the client device for the first data. In this case, the storage system sends, to the client device as the storage address of the abnormal data block, the ID of the LUN or storage volume to which the first data carried in the IO request belongs, the length of the first data, and the LBA at which the first data is stored. If the storage address of the first data carried in the IO request is allocated by the storage system, the storage system sends, to the client device as the storage address of the abnormal data block, an ID of an LUN or a storage volume to which the first data carried in the IO request belongs, a length of the first data, and an LBA or a PBA allocated by the storage system for the first data.

Example 3: When the storage system detects that the received IO request is a malicious IO request, the storage system determines that data that the IO request requests to process is abnormal data. If the IO request carries the storage address of the data that the IO request requests to process, the storage system sends the storage address carried in the IO request to the client device as the storage address of the abnormal data block. If the IO request does not carry the storage address of the data that the IO request requests to process, and the IO request is an IO request that carries first data and indicates to write the first data into the storage system, the storage system may send the storage address of the abnormal data block to the client device according to the process described in Example 2.

Optionally, when there are multiple abnormal data blocks, the storage system may send the storage addresses of the multiple abnormal data blocks to the client device as one piece of information, or may send the storage addresses of the multiple abnormal data blocks to the client device as multiple pieces of information. This is not limited herein.

Step 3013: The client device receives the storage address of the abnormal data block sent by the storage system.

For example, the client device receives, through a communication protocol interface between the client device and the storage system, the storage address of the abnormal data block sent by the storage system.

Step 3014: The client device queries a second mapping relationship set based on the storage address of the abnormal data block, to determine an abnormal object.

The abnormal object refers to an object to which data recorded in the abnormal data block belongs. In other words, the abnormal object is an object infected with a virus or under a malicious attack. The second mapping relationship set includes a correspondence between an object maintained by the client device and a storage address of a data block of the object in the storage system. For detailed descriptions, refer to the foregoing descriptions about the second mapping relationship set. Details are not described again.

In a possible implementation, when the type of the storage address of the abnormal data block sent by the storage system to the client device is the same as the type of the storage address in the second mapping relationship set updated and maintained by the client device, the client device directly queries the second mapping relationship set based on the storage address of the abnormal data block, and determines, as an abnormal object, an object represented by an object tag that is in the second mapping relationship set and has a correspondence with the storage address of the abnormal data block.

The type of the storage address includes a logical address and a physical address.

In another possible implementation, when the type of the storage address of the abnormal data block sent by the storage system to the client device is different from the type of the storage address recorded in the second mapping relationship set, the client device first queries, based on the storage address (denoted as a fourth storage address) of the abnormal data block received from the storage system, an address mapping relationship set configured on the client device, to determine a storage address (denoted as the fifth storage address) having a mapping relationship with the fourth storage address. Then, the client device queries the second mapping relationship set based on the fifth storage address, and determines, as an abnormal object, an object represented by an object tag that is in the second mapping relationship set and has a correspondence with the fifth storage address.

The address mapping relationship set includes a mapping relationship between a logical address and a physical address of data stored in the storage system. A process in which the client device configures the address mapping relationship set is not described in detail in this embodiment of this application. For example, when storing data, the storage system generally maintains an address mapping relationship set. Therefore, the client device may obtain a mapping relationship in the address mapping relationship set from the storage system in real time and store the mapping relationship, to obtain the address mapping relationship set maintained by the client device.

For example, when the storage address recorded in the second mapping relationship set is a logical address, and the storage address of the abnormal data block sent by the storage system to the client device is a physical address (denoted as a physical address 1), the client device queries the address mapping relationship set based on the received physical address 1, to determine a logical address 1 having a mapping relationship with the physical address 1. Then, the client device queries the second mapping relationship set based on the logical address 1, and determines, as an abnormal object, an object represented by an object tag that is in the second mapping relationship set and has a correspondence with the logical address 1.

Optionally, if the object tag recorded in the second mapping relationship set is the object identifier described in step 101, the client device further queries the third mapping relationship set based on the object identifier of the abnormal object found based on the second mapping relationship set, to determine the abnormal object corresponding to the object identifier of the abnormal object.

Step 3015: The client device determines the target object from the determined abnormal object.

In a possible implementation, the client device directly determines the determined abnormal object as the target object.

In another possible implementation, the client device determines an abnormal object including hot data as the target object. In an example, the client device first determines hotness of data included in each abnormal object, and determines an abnormal object including data whose hotness value is greater than a threshold as the target object, where the data whose hotness value is greater than the threshold is hot data.

In still another possible implementation, the client device determines the target object from the abnormal object in response to a first recovery indication input by the user.

Specifically, after determining the abnormal object, the client device outputs alarm information to a user, where the alarm information indicates that the data of the abnormal object is infected with a virus or under a malicious attack, and is used to determine whether the data of the abnormal object needs to be recovered. For example, the client device may output the alarm information through an output interface (such as an output interface being a display, a monitor, a speaker, or the like) of the client device. Based on the alarm information output by the client device, the user may select, based on a requirement of the user, whether to recover the data of the abnormal object, and select, based on a requirement of the user, which objects in the abnormal object indicated by the alarm information are to be recovered.

Further, the client device receives the first recovery indication input by the user to the client device through an input interface (such as an input interface being a mouse, a keyboard, a touchscreen, a microphone, or the like) of the client device. When the first recovery indication received by the client device indicates that data of all abnormal objects does not need to be recovered, the client device ends the data recovery procedure as a response. When the first recovery indication received by the client device indicates to recover data of some or all abnormal objects in abnormal objects, the client device determines, in response to the first recovery indication, an abnormal object that the user selects and whose data needs to be recovered as the target object. In this case, there are one or more target objects.

It can be learned that the alarm information and the first recovery indication herein are the same as the first recovery indication and the alarm information in step 201.

Step 302: The client device queries a second mapping relationship set based on an object tag of the target object, to determine a storage address of the data block of the target object.

The second mapping relationship set includes a correspondence between an object maintained by the client device and a storage address of a data block of the object in the storage system. For detailed descriptions, refer to the foregoing descriptions about the second mapping relationship set. Details are not described again.

Specifically, the client device queries the second mapping relationship set based on the object tag of the target object, and determines, as the storage address of the data block of the target object, all storage addresses that are in the second mapping relationship set and have a correspondence with the object tag of the target object. For brief description, "the storage address of the data block of the target object" is denoted as a target storage address in the following.

Step 303: The client device sends a data recovery indication to the storage system, where the data recovery indication includes the target storage address.

The data recovery indication indicates the storage system to recover the data of the target object.

For example, the client device sends the storage address of the data block of the target object to the storage system through a communication protocol interface between the client device and the storage system.

Step 304: The storage system receives the data recovery indication including the target storage address sent by the client device.

The data recovery indication includes the storage address of the data block of the target object, the target object is any type of semantic-level data, and the data block of the target object is stored in the storage system in a block-level manner.

For example, the storage system receives, through a communication protocol interface between the storage system and the client device, the data recovery indication sent by the client device.

Step 305: The storage system recovers the data of the target object based on data stored at the target storage address in a first snapshot.

The first snapshot is a snapshot obtained by performing a snapshot operation on the data in the storage system at a first time. For detailed descriptions of the first snapshot, refer to related descriptions in step 202 and step 203. Details are not described again.

In a possible implementation, the storage system directly determines the data stored at the target storage address in the first snapshot as recovered data of the target object. In other words, the storage system rolls back the data of the target object to the data stored at the target storage address in the first snapshot, to recover the data of the target object.

In another possible implementation, when the storage system recovers the data of the target object based on the data stored at the target storage address in the first snapshot, the storage system first detects whether the data stored at the target storage address in the first snapshot is infected with a virus or under a malicious attack.

Then, if the storage system determines that the data stored at the target storage address in the first snapshot is not infected with a virus or under a malicious attack, the storage system determines that the data stored at the target storage address in the first snapshot is recovered data of the target object. In other words, the storage system rolls back the data of the target object to the data stored at the target storage address in the first snapshot, to recover the data of the target object data.

When the storage system determines that the data stored at the target storage address in the first snapshot is infected with a virus or under a malicious attack, the storage system recovers the data of the target object based on data stored at the target storage address in a second snapshot. For detailed descriptions of the second snapshot, refer to related descriptions of the second snapshot in step 203. For detailed descriptions of recovering the data of the target object by the storage system based on the data stored at the target storage address in the second snapshot, refer to the descriptions of recovering the data of the target object by the storage system based on the data stored at the target storage address in the first snapshot. Details are not described again.

In this way, by using the method described in step 301 to step 305, data recovery at a granularity of semantic-level data (that is, an object) is implemented in a storage system that stores data in a block-level storage manner. Compared with data recovery at a granularity of an LUN or a volume, data recovery using the method according to this embodiment of this application is at a fine granularity, achieving fast and efficient data recovery. In addition, for a SAN storage system that stores data in the form of data blocks, ransomware detection and recovery at a data block level can be implemented in current academic research. However, the SAN storage system has no file system structure, and files with semantic information, instead of data blocks, are presented on the user side of the SAN storage system, and one file typically corresponds to multiple data blocks. Therefore, data recovery at a granularity of a data block may cause loss of file information displayed on the user side. For example, a ransomware-laced file on the user side corresponds to 10 data blocks in the storage system. If the storage system detects and recovers nine data blocks but misses one data block, the ransomware-laced file may still be unavailable on the user side. According to the method provided in this embodiment of this application, data is recovered at a granularity of semantic-level data (that is, an object), addressing the problem of possible loss of file information displayed on the user side that may occur when data is recovered at a granularity of a data block in academic research.

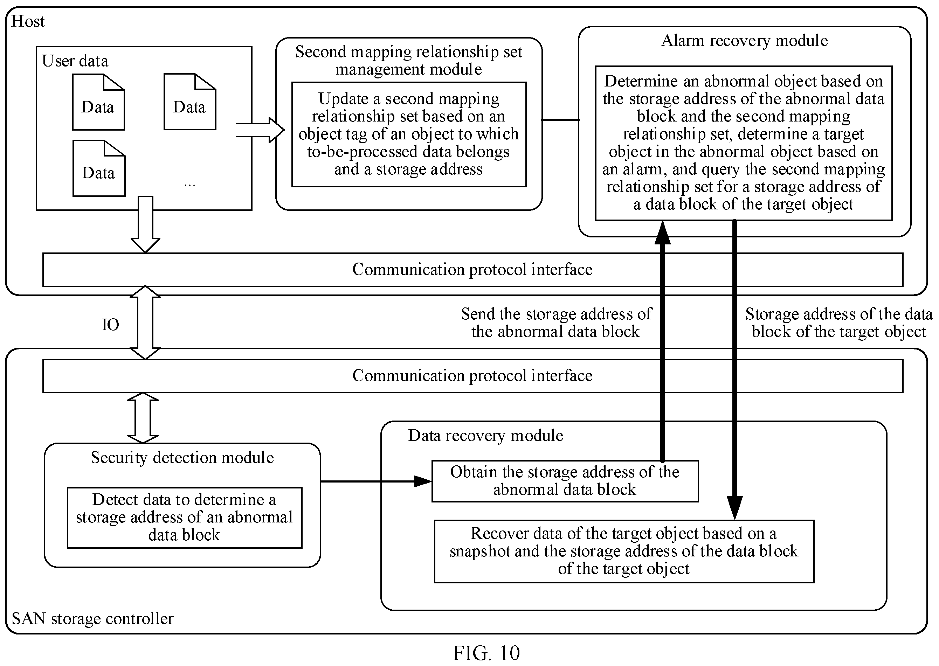

To deepen understanding of the data recovery method described in step 301 to step 305, the following further describes the method provided in this embodiment of this application with reference to examples. For example, the client device is a host, the storage system is a SAN storage system, and the steps performed by the storage system in the method in FIG. 8 or FIG. 9 are specifically performed by a controller of the SAN storage system, that is, a SAN storage controller. FIG. 10 is still another schematic flowchart of a data recovery method according to an embodiment of this application.

As shown in FIG. 10, on the host side, the host includes a second mapping relationship set management module. The module is configured to update a second mapping relationship set based on an object tag and a storage address of an object to which to-be-processed data belongs. For detailed descriptions, refer to the foregoing descriptions of the process of "updating and maintaining the second mapping relationship set by the client device". Details are not described again.

On the SAN storage system side, the SAN storage controller includes a security detection module and a data recovery module. The security detection module is configured to detect data to determine a storage address of an abnormal data block. For detailed descriptions of this process, refer to the descriptions of step 3011. Details are not described again. The data recovery module is configured to obtain the storage address of the abnormal data block, and send the obtained storage address of the abnormal data block to the host. For detailed descriptions of this process, refer to related descriptions of step 3012. Details are not described again.

On the host side, the host further includes an alarm recovery module, where the module is configured to receive the storage address of the abnormal data block from the SAN storage controller, determine an abnormal object based on the storage address of the abnormal data block and the second mapping relationship set, determine a target object in the abnormal object based on an alarm, and query the second mapping relationship set for a storage address of a data block of the target object. For detailed descriptions of this process, refer to related descriptions of step 3013 to step 3015 and step 302. Details are not described again. Then, the host sends the storage address of the data block of the target object to the SAN storage controller (refer to the descriptions in step 303).

Further, the data recovery module of the SAN storage controller recovers data of the target object based on a historical snapshot obtained by performing a snapshot operation on the data in the SAN storage system and the storage address of the data block of the target object received from the host. For a detailed process, refer to the descriptions in step 305. Details are not described again.

The foregoing mainly describes the solutions provided in embodiments of this application from the perspective of the methods.

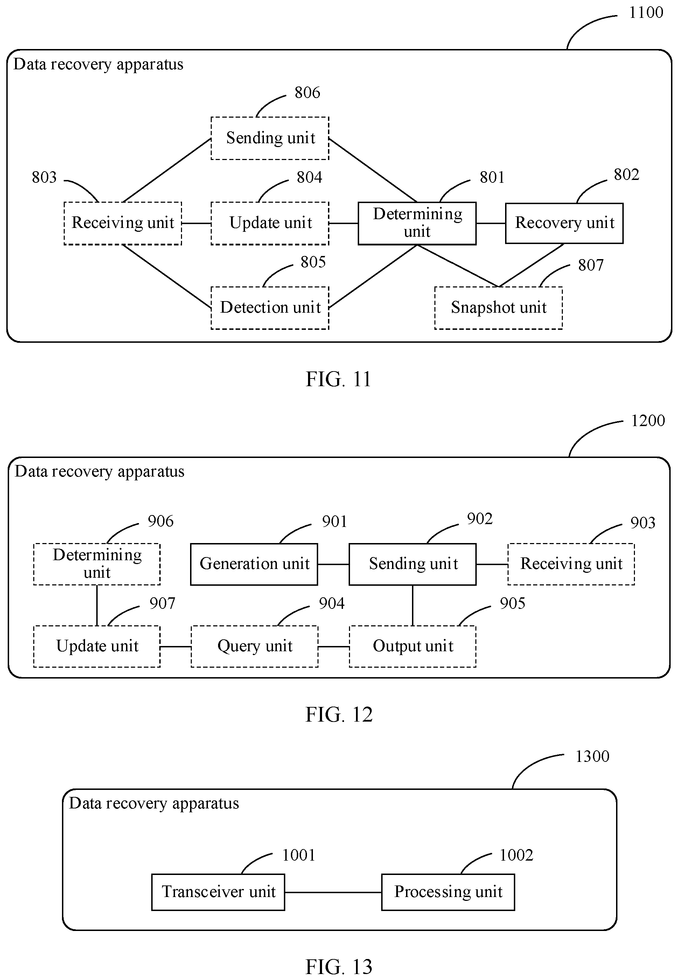

To implement the foregoing functions, FIG. 11 shows a diagram of a structure of a data recovery apparatus according to an embodiment of this application. The data recovery apparatus 1100 is used in a storage system that stores data in a block-level storage manner, and is configured to perform the foregoing data recovery method, for example, configured to perform the part performed by the storage system in the method shown in FIG. 3, FIG. 5, or FIG. 6. The data recovery apparatus 1100 may include a determining unit 801 and a recovery unit 802.

The determining unit 801 is configured to: determine a target object whose data needs to be recovered; and determine, based on a first mapping relationship set associated with a first snapshot, a first storage address at which a data block of the target object is stored in the first snapshot. The recovery unit 802 is configured to recover the data of the target object based on data stored at the first storage address in the first snapshot. The target object is any type of semantic-level data, the storage system stores a data block of the target object in a block-level manner, the first snapshot is a snapshot obtained by performing a snapshot operation on data in the storage system at a first time, and the first mapping relationship set associated with the first snapshot includes a correspondence between an object maintained by the storage system and a storage address of a data block of the object as of the first time.

For example, with reference to FIG. 5, the determining unit 801 may be configured to perform step 201 and step 202, and the recovery unit 802 may be configured to perform step 203.

Optionally, the data recovery apparatus 1100 further includes: a receiving unit 803, configured to receive an IO request, where the IO request indicates to perform a write operation on to-be-processed data, the IO request includes an identifier of an object to which the to-be-processed data belongs, and the object to which the to-be-processed data belongs is any type of semantic-level data; and an update unit 804, configured to update the first mapping relationship set based on the identifier of the object to which the to-be-processed data belongs and a storage address of the to-be-processed data.

For example, with reference to FIG. 3, the receiving unit 803 may be configured to perform step 103, and the update unit 804 may be configured to perform step 104.

Optionally, the receiving unit 803 is configured to receive an IO request that carries a first identifier and first data, where the first data is data of a first object represented by the first identifier. The data recovery apparatus 1100 further includes a detection unit 805, configured to detect whether the first data is infected with a virus or under a malicious attack. The determining unit 801 is specifically configured to: when it is determined that the first data is infected with a virus or under a malicious attack, determine the first object as the target object.

Optionally, the detection unit 805 is further configured to detect a data block stored in the storage system, to determine a target data block in the storage system infected with a virus or under a malicious attack. The determining unit 801 is specifically configured to: query the first mapping relationship set based on a storage address of the target data block, to determine a first object corresponding to the storage address of the target data block; and determine the first object as the target object.

Optionally, the data recovery apparatus 1100 further includes: a sending unit 806, configured to send a first recovery request to a client device before the first object is determined as the target object, where the first recovery request includes an identifier of the first object, and the first recovery request is used to determine whether to recover data of the first object. The receiving unit 803 is further configured to receive an acknowledgment message returned by the client device, where the acknowledgment message indicates to recover the data of the first object.

Optionally, the sending unit 806 is further configured to send a first recovery request to a client device before the first object is determined as the target object, where the first recovery request includes an identifier of the first object, and the first recovery request is used to determine whether to recover data of the first object. The receiving unit 803 is further configured to receive an acknowledgment message returned by the client device, where the acknowledgment message indicates to recover the data of the first object.

Optionally, the determining unit 801 is specifically configured to determine a first object as the target object when receiving a second recovery request sent by a client device. The second recovery request includes an identifier of the first object, and the second recovery request is used to request to recover data of the first object.

Optionally, the recovery unit 802 is specifically configured to: detect whether the data stored at the first storage address in the first snapshot is infected with a virus or under a malicious attack; and when it is determined that the data stored at the first storage address in the first snapshot is not infected with a virus or under a malicious attack, determine the data stored at the first storage address in the first snapshot as recovered data of the target object.

For example, with reference to FIG. 6, the recovery unit 802 may be configured to perform step 2031 to step 2032.

Optionally, the update unit 804 is further configured to update, based on an identifier of the target object and the first storage address, the first mapping relationship set currently maintained by the storage system.

For example, with reference to FIG. 6, the update unit 804 may be configured to perform step 2033.

Optionally, the determining unit 801 is further configured to: when it is determined that the data stored at the first storage address in the first snapshot is infected with a virus or under a malicious attack, determine, based on the first mapping relationship set associated with a second snapshot, a second storage address at which the data block of the target object is stored in the second snapshot. The recovery unit 802 is further configured to recover the data of the target object based on data stored at the second storage address in the second snapshot. The second snapshot is a snapshot obtained by performing a snapshot operation on the storage system at a second time prior to the first time, and the first mapping relationship set associated with the second snapshot includes a correspondence between an object maintained by the storage system and a storage address of a data block of the object as of the second time.

For example, with reference to FIG. 6, the determining unit 801 and the recovery unit 802 may be configured to perform step 2034.

Optionally, the data recovery apparatus 1100 further includes a snapshot unit 807, configured to: before the first storage address at which the data block of the target object is stored in the first snapshot is determined based on the first mapping relationship set associated with the first snapshot, perform at least one snapshot operation on the data in the storage system to obtain at least one snapshot, where the first snapshot is one of the at least one snapshot.

Optionally, the snapshot unit 807 is specifically configured to periodically perform a snapshot operation on the data in the storage system to obtain at least one snapshot.

Optionally, the first snapshot is a snapshot obtained by performing the most recent snapshot operation on the data in the storage system prior to the current moment.

Optionally, the target object is a file or a database/table.

Optionally, the storage address is represented by an LBA and an ID of an LUN or a storage volume to which the LBA belongs, or the storage address is represented by a PBA and an ID of an LUN or a storage volume to which the PBA belongs.

Optionally, the snapshot is a snapshot obtained by performing a snapshot operation on the data in the storage system at a granularity of an LUN or a storage volume.

Optionally, the storage system is a data storage system based on a SAN. Alternatively, the storage system is a DAS storage system.

For detailed descriptions of the foregoing optional implementations, refer to the foregoing method embodiments. Details are not described herein again. In addition, for any interpretation of the data recovery apparatus 1100 provided above and descriptions of beneficial effects, refer to the foregoing corresponding method embodiments. Details are not described again.

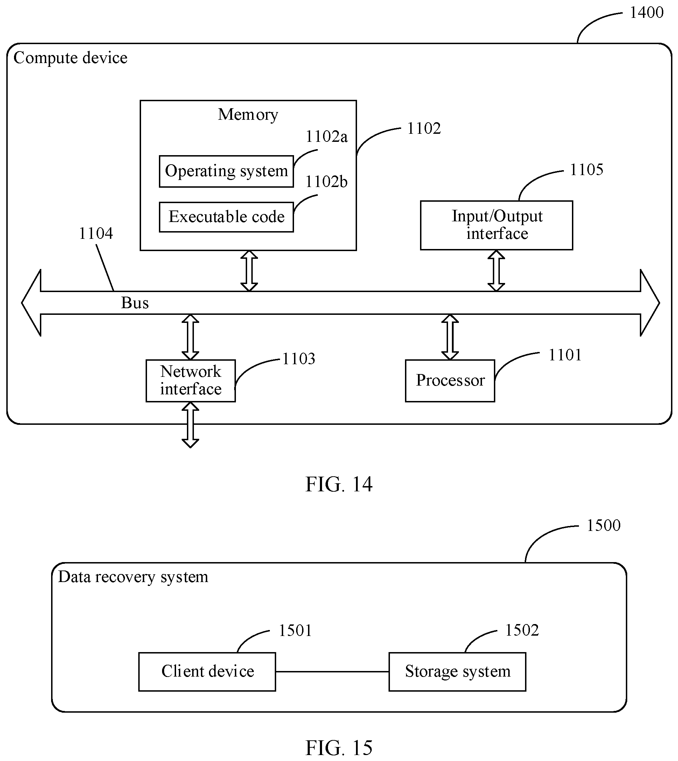

For example, with reference to FIG. 14 described below, functions implemented by the determining unit 801, the recovery unit 802, the update unit 804, the detection unit 805, and the snapshot unit 807 in the data recovery apparatus 1100 may be implemented by the processor 1101 in FIG. 14 by executing program code in the memory 1102 in FIG. 14. Functions implemented by the receiving unit 803 and the sending unit 806 in the data recovery apparatus 1100 may be implemented through the network interface 1103 shown in FIG. 14.

FIG. 12 shows a diagram of a structure of another data recovery apparatus according to an embodiment of this application. The data recovery apparatus 1200 is used in a client device that accesses a storage system, and the storage system stores data in a block-level storage manner. The data recovery apparatus 1200 is configured to perform the foregoing data recovery method, for example, configured to perform the part performed by the client device in the method shown in FIG. 3, FIG. 5, or FIG. 6. The data recovery apparatus 1200 may include a generation unit 901 and a sending unit 902.

The generation unit 901 is configured to generate an IO request indicating to perform a write operation on data of a first object, where the IO request includes an identifier of the first object, and the data of the first object is any type of semantic-level data. The sending unit 902 is configured to send the IO request to a storage system, where the identifier of the first object carried in the IO request is used to update a first mapping relationship set. The first mapping relationship set includes a correspondence between an object and a storage address of data of the object, and the first mapping relationship set is used to determine, when the data of the first object is recovered, a storage address of recovered data of the first object in a snapshot, where the snapshot refers to a snapshot obtained by performing a snapshot operation on data in the storage system.

For example, with reference to FIG. 3, the generation unit 901 may be configured to perform step 101, and the sending unit 902 may be configured to perform step 102.

Optionally, the data recovery apparatus 1200 further includes: a receiving unit 903, configured to receive a first recovery request sent by the storage system, where the first recovery request includes the identifier of the first object, and the first recovery request is used to determine whether to recover the data of the first object. The sending unit 902 is configured to return an acknowledgment message to the storage system when it is determined to recover the data of the first object, where the acknowledgment message indicates to recover the data of the first object.

Optionally, the receiving unit 903 is specifically configured to receive, through a preset protocol interface, the first recovery request sent by the storage system. The sending unit 902 is specifically configured to send the acknowledgment message to the storage system through a preset protocol interface.

Optionally, the data recovery apparatus 1200 further includes: a query unit 904, configured to query a third mapping relationship set based on the identifier of the first object carried in the first recovery request, to determine the first object, where the third mapping relationship set is used to record a correspondence between an identifier of an object and the object; and an output unit 905, configured to output alarm information, where the alarm information indicates that the data of the first object is infected with a virus or under a malicious attack. The sending unit 902 is configured to return the acknowledgment message to the storage system in response to a first recovery indication input by the user based on the alarm information, where the first recovery indication indicates to recover the data of the first object.

Optionally, the data recovery apparatus 1200 further includes: a determining unit 906, configured to determine the identifier of the first object before the third mapping relationship set is queried based on the identifier of the first object carried in the first recovery request; and an update unit 907, configured to update the third mapping relationship set based on the identifier of the first object.

Optionally, the sending unit 902 is further configured to send a second recovery request to the storage system, where the second recovery request includes the identifier of the first object, and the second recovery request is used to request to recover the data of the first object.

Optionally, the storage address is represented by an LBA and an ID of an LUN or a storage volume to which the LBA belongs, or the storage address is represented by a PBA and an ID of an LUN or a storage volume to which the PBA belongs.

Optionally, the first object is a file or a database/table.

Optionally, the snapshot is a snapshot obtained by performing a snapshot operation on the data in the storage system at a granularity of an LUN or a storage volume.

Optionally, the storage system is a data storage system based on a SAN, or the storage system is a DAS storage system.

For detailed descriptions of the foregoing optional implementations, refer to the foregoing method embodiments. Details are not described herein again. In addition, for any interpretation of the data recovery apparatus 1200 provided above and descriptions of beneficial effects, refer to the foregoing corresponding method embodiments. Details are not described again.

For example, with reference to FIG. 14 described below, functions implemented by the generation unit 901, the query unit 904, the determining unit 906, and the update unit 907 in the data recovery apparatus 1200 may be implemented by the processor 1101 in FIG. 14 by executing program code in the memory 1102 in FIG. 14. Functions implemented by the sending unit 902 and the receiving unit 903 in the data recovery apparatus 1200 may be implemented through the network interface 1103 shown in FIG. 14. Functions implemented by the output unit 905 in the data recovery apparatus 1200 may be implemented through the input/output interface 1105 in FIG. 14.

FIG. 13 shows a diagram of a structure of still another data recovery apparatus according to an embodiment of this application. The data recovery apparatus 1300 may be used in a storage system that stores data in a block-level storage manner, and is configured to perform the foregoing data recovery method, for example, configured to perform the part performed by the storage system in the method shown in FIG. 3, FIG. 5, or FIG. 6. The data recovery apparatus 1300 may be further used in the client device that accesses the foregoing storage system, and is configured to perform the data recovery method provided in embodiments of this application, for example, configured to perform the part performed by the client device in the method shown in FIG. 3, FIG. 5, or FIG. 6. The data recovery apparatus 1300 may include a transceiver unit 1001 and a processing unit 1002. The transceiver unit 1001 is configured to perform an operation related to sending and/or receiving in the method provided in embodiments of this application, and the processing unit 1002 is configured to perform an operation other than the operation related to sending and/or receiving in the method in embodiments of this application. For interpretations of the data recovery apparatus 1300 and descriptions of beneficial effects, refer to the foregoing corresponding method embodiments. Details are not described again.

For example, with reference to FIG. 14 described below, functions implemented by the transceiver unit 1001 in the data recovery apparatus 1300 may be implemented through the network interface 1103 in FIG. 14. Functions implemented by the processing unit 1002 in the data recovery apparatus 1300 may be implemented by the processor 1101 in FIG. 14 by executing program code in the memory 1102 in FIG. 14.

A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

It should be noted that module/unit division in FIG. 11, FIG. 12, or FIG. 13 is an example, and is merely logical function division. In actual implementation, another division manner may be used. For example, two or more functions may be integrated into one processing module. The integrated module may be implemented in the form of hardware, or may be implemented in the form of a software functional module.

An embodiment of this application provides a compute device. The compute device is configured to implement some or all functions of the data recovery method provided in embodiments of this application. For example, the compute device may be the control module in the storage system described above, or the client device configured to access the storage system described above.

FIG. 14 is a diagram of a structure of a compute device according to an embodiment of this application. As shown in FIG. 14, the compute device 1400 includes a processor 1101, a memory 1102, a network interface 1103, a bus 1104, and an input/output interface 1105. The processor 1101, the memory 1102, the network interface 1103, and the input/output interface 1105 are communicatively connected to each other through the bus 1104.

The processor 1101 may include a general-purpose processor and/or a dedicated hardware chip. The general-purpose processor may include a central processing unit (central processing unit, CPU), a microprocessor, or a graphics processing unit (graphics processing unit, GPU). For example, the CPU is a single-core processor (single-CPU), or a multi-core processor (multi-CPU). The dedicated hardware chip is a hardware module capable of performing high-performance processing. The dedicated hardware chip includes at least one of a digital signal processor (digital signal processor, DSP), a data processing unit (data processing unit, DPU), an application-specific integrated circuit (application-specific integrated circuit, ASIC), a field-programmable gate array (field-programmable gate array, FPGA), another programmable logic device, a discrete gate or transistor logic device, a discrete hardware component, a neural network processing unit (neural processing unit, NPU), a tensor processing unit (tensor processing unit, TPU), an artificial intelligence (artificial intelligent) chip, or a network processor (network processor, NP). The processor 1101 may alternatively be an integrated circuit chip and has a signal processing capability. In an implementation process, some or all functions of the method provided in embodiments of this application may be implemented by using a hardware integrated logic circuit in the processor 1101 or instructions in the form of software.

The memory 1102 is configured to store a computer program, and the computer program includes an operating system 1102a and executable code (namely, program instructions) 1102b. The memory 1102 is, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a flash memory or another type of static storage device that can store static information and instructions, a random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM) or another type of dynamic storage device that can store information and instructions, a read-only disc or other optical disc storage, an optical disc storage (including a compact disc, a laser disc, an optical disc, a digital versatile disc, a Blu-ray disc, and the like), a magnetic disk storage medium or another magnetic storage device, or any other medium that is accessible to a computer and that can be used to carry or store expected executable code in the form of instructions or data structures. This is not limited thereto. For example, the memory 1102 is configured to store a first mapping relationship set, a second mapping relationship set, and the like. For example, the memory 1102 exists independently, and is connected to the processor 1101 through the bus 1104. Alternatively, the memory 1102 is integrated with the processor 1101. The memory 1102 may store executable code. When the executable code stored in the memory 1102 is executed by the processor 1101, the processor 1101 is configured to perform some or all functions of the data recovery method provided in embodiments of this application. For an implementation of performing the process by the processor 1101, accordingly refer to related descriptions in the foregoing embodiments. The memory 1102 may further include another software module, data, and the like, for example, an operating system, for running a process.

The network interface 1103 uses a transceiver module, for example, but not limited to a transceiver, to implement communication with another device or a communication network. For example, the network interface 1103 may be any one or any combination of the following components having a network access function: a network interface (for example, an ethernet interface) or a wireless network interface card. The network interface 1103 includes a receiving unit configured to receive data/a packet and a sending unit configured to send data/a packet.

The bus 1104 is any type of communication bus configured to implement interconnection between internal components (for example, the memory 1102, the processor 1101, and the network interface 1103) of the compute device 1400, for example, a system bus. In this embodiment of this application, an example in which the foregoing components in the compute device 1400 are interconnected through the bus 1104 is used for description. Optionally, in addition to using the bus 1104, the foregoing components in the compute device 1400 may alternatively be communicatively connected to each other in another connection manner. For example, the foregoing components in the compute device 1400 are interconnected through an internal logical interface.

The input/output interface 1105 is configured to implement human-computer interaction between a user and the compute device 1400, for example, implement text interaction, voice interaction, or the like between the user and the compute device 1400. The input/output interface 1105 includes an input interface for the user to input information to the compute device 1400, and includes an output interface for the compute device 1400 to output information to the user. For example, the input interface includes but is not limited to a touchscreen, a keyboard, a mouse, a microphone, or the like, and the output interface includes but is not limited to a display, a speaker, or the like. The touchscreen, the keyboard, or the mouse is configured to input text/image information, the microphone is configured to input voice information, the display is configured to output text/image information, and the speaker is configured to output voice information.

It should be noted that the foregoing multiple components may be separately disposed on chips independent of each other, or at least some or all of the components may be disposed on a same chip. Whether the components are separately disposed on different chips or integrated and disposed on one or more chips usually depends on a requirement of a product design. This embodiment of this application imposes no limitation on specific implementations of the foregoing components. Descriptions of procedures corresponding to the foregoing accompanying drawings have respective focuses. For a part that is not described in detail in a procedure, refer to related descriptions of other procedures.

All or some of the foregoing embodiments may be implemented by using software, hardware, firmware, or any combination thereof. When software is used to implement the embodiments, all or some of the embodiments may be implemented in the form of a computer program product. The computer program product that provides a program development platform includes one or more computer instructions. When these computer program instructions are loaded and executed on the compute device 1400, all or some of functions of the data recovery method provided in embodiments of this application are partially or completely implemented.

The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium stores the computer program instructions that provide the program development platform.

An embodiment of this application further provides a data recovery system. The system includes a client device and a storage system. The data recovery method described above is applied to the data recovery system. For example, the method described in FIG. 3, FIG. 5, FIG. 6, or FIG. 7 is applied to the data recovery system.

As shown in FIG. 15, an embodiment of this application further provides another data recovery system. FIG. 15 shows a diagram of a structure of a data recovery system according to an embodiment of this application. The data recovery method described above is applied to the data recovery system 1500 shown in FIG. 15. For example, the method described in FIG. 8, FIG. 9, or FIG. 10 is applied to the data recovery system 1500. The data recovery system 1500 includes a client device 1501 and a storage system 1502.

The client device 1501 is configured to: determine a target object whose data needs to be recovered; query a second mapping relationship set based on an object tag of the target object, to determine a storage address of a data block of the target object, that is, a target storage address; and send a data recovery indication including the target storage address to the storage system 1502, where the data recovery indication indicates to recover the data of the target object based on the target storage address. The target object is any type of semantic-level data, the data block of the target object is stored in the storage system 1502 in a block-level manner, and the storage system 1502 stores data in a block-level storage manner. The second mapping relationship set includes a correspondence between an object maintained by the client device 1501 and a storage address of a data block of the object in the storage system 1502.

For example, with reference to FIG. 8, the client device 1501 may be configured to perform step 301 to step 303.

Optionally, the storage system 1502 is configured to: receive the data recovery indication including the target storage address sent by the client device 1501; and recover the data of the target object based on data stored at the target storage address in a first snapshot. The first snapshot is a snapshot obtained by performing a snapshot operation on the data in the storage system 1502 at a first time.

For example, with reference to FIG. 8, the storage system 1502 may be configured to perform step 304 to step 305.

Optionally, the storage system 1502 is further configured to: detect whether the data stored in the storage system 1502 is infected with a virus or under a malicious attack; and send a storage address of an abnormal data block to the client device 1501. The abnormal data block is a data block in which data infected with a virus or under a malicious attack is located. The client device 1501 is specifically configured to: receive the storage address of the abnormal data block sent by the storage system 1502; query the second mapping relationship set based on the storage address of the abnormal data block, to determine an abnormal object; and determine the target object in the abnormal object.

For example, with reference to FIG. 9, the storage system 1502 may be configured to perform step 3011 to step 3012, and the client device 1501 may be configured to perform step 3013 to step 3015.

Optionally, the client device 1501 is specifically configured to determine the target object in response to a received object recovery indication. The object recovery indication includes an object identifier of the target object.

Optionally, the storage system 1502 is specifically configured to: detect whether the data stored at the target storage address in the first snapshot is infected with a virus or under a malicious attack; and when it is determined that the data stored at the target storage address in the first snapshot is not infected with a virus or under a malicious attack, determine the data stored at the target storage address in the first snapshot as recovered data of the target object.

Optionally, the storage system 1502 is further configured to: when it is determined that the data stored at the target storage address in the first snapshot is infected with a virus or under a malicious attack, recover the data of the target object based on data stored at the target storage address in a second snapshot. The second snapshot is a snapshot obtained by performing a snapshot operation on the storage system 1502 at a second time prior to the first time.

Optionally, the target object is a file or a database/table.

Optionally, the storage address is represented by an LBA and an ID of an LUN or a storage volume to which the LBA belongs, or the storage address is represented by a PBA and an ID of an LUN or a storage volume to which the PBA belongs.

Optionally, the snapshot is a snapshot obtained by performing a snapshot operation on the data in the storage system 1502 at a granularity of an LUN or a storage volume.

Optionally, the storage system 1502 is a data storage system based on a SAN, or the storage system 1502 is a DAS storage system.

For detailed descriptions of the foregoing optional implementations, refer to the foregoing method embodiments. Details are not described herein again. In addition, for any interpretation of the data recovery system 1500 provided above and descriptions of beneficial effects, refer to the foregoing corresponding method embodiments. Details are not described again.

It should be noted that, for a hardware structure of the client device 1501 in the data recovery system 1500, reference may be made to the descriptions of the hardware structure of the compute device in FIG. 14. For a hardware structure of a device used to implement the storage system 1502 in the data recovery system 1500, reference may be made to the descriptions of the hardware structure of the compute device in FIG. 14. Details are not described again.

An embodiment of this application further provides a computer-readable storage medium. The computer-readable storage medium is a non-volatile computer-readable storage medium, and the computer-readable storage medium includes computer program instructions. When the computer program instructions are executed by a compute device, a computer system, or a processor, the compute device, the computer system, or the processor performs the data recovery method provided in embodiments of this application.

An embodiment of this application further provides a computer program product including instructions. When the instructions are run by a compute device, a computer system, or a processor, the compute device, the computer system, or the processor is caused to implement the data recovery method provided in embodiments of this application.

The computer system is a system having a computing processing capability. The computer system typically includes a processor and a memory. The processor is configured to invoke and run instructions stored in the memory, to cause the computer system to implement the foregoing data recovery method. Optionally, the computer system may further include at least one of an input interface or an output interface. The processor, the memory, the input interface, and the output interface of the computer system are connected through an internal connection path.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

It should be noted that information (including but not limited to user equipment information, user personal information, and the like), data (including but not limited to data for analysis, data for storage, data for display, and the like), and signals in this application are all authorized by users or fully authorized by all parties, and collection, use, and processing of related data need to comply with related laws, regulations, and standards of related countries and regions.

An embodiment of this application further provides a chip. The chip includes a processor configured to run program instructions or code. The chip or a device including the chip may be configured to perform the data recovery method provided in embodiments of this application. For example, the chip further includes an input interface, an output interface, and a memory. The input interface, the output interface, the processor, and the memory of the chip are connected through an internal connection path of the chip. The memory in the chip is configured to store program instructions or code run by the processor. The input interface and the output interface of the chip are configured to connect and communicate with another chip or device.

In embodiments of this application, the terms "first", "second", and "third" are for purposes of description only, but are not to be construed as indicating and implying relative importance. Unless otherwise specified, the term "at least one" refers to one or more, and the term "multiple" refers to more than one.

The term "and/or" in this application describes only an association relationship for describing associated objects and represents that three relationships may exist. For example, A and/or B may indicate the following three cases: Only A exists, both A and B exist, and only B exists. In addition, the character "/" in this specification generally indicates an "or" relationship between the associated objects.

It should be understood that the terms used in the descriptions of the various examples herein are merely intended to describe specific examples and are not intended to impose a limitation. The terms "one" ("a" and "an") and "the" of singular forms used in the descriptions of the various examples and the appended claims are also intended to include plural forms, unless otherwise explicitly specified in the context.

It should be understood that determining B based on A does not mean that B is determined based on A alone. Alternatively, B may be determined based on A and/or other information.

It should be understood that the term "include" (also referred to as "includes", "including", "comprises", and/or "comprising"), when used in this specification, specifies the presence of stated features, integers, steps, operations, elements, and/or components, but does not preclude presence or addition of one or more other features, integers, steps, operations, elements, components, and/or groups thereof.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

The foregoing descriptions are merely optional embodiments of this application, but are not intended to limit this application. Any modification, equivalent replacement, improvement, or the like made within the concept and principle of this application shall fall within the protection scope of this application.

## Claims

1. A data recovery method, applied to a storage system, wherein the storage system stores data in a block-level storage manner, and the method comprises:
determining a target object whose data needs to be recovered, wherein the target object is any type of semantic-level data, and a data block of the target object is stored in the storage system in a block-level manner;
determining, based on a first mapping relationship set associated with a first snapshot, a first storage address at which the data block of the target object is stored in the first snapshot, wherein the first snapshot is a snapshot obtained by performing a snapshot operation on data in the storage system at a first time, and the first mapping relationship set associated with the first snapshot comprises a correspondence between an object maintained by the storage system and a storage address of a data block of the object as of the first time; and
recovering the data of the target object based on data stored at the first storage address in the first snapshot.

2. The method according to claim 1, wherein the method further comprises:
receiving an input/output IO request, wherein the IO request indicates to perform a write operation on to-be-processed data, the IO request comprises an identifier of an object to which the to-be-processed data belongs, and the object to which the to-be-processed data belongs is any type of semantic-level data; and
updating the first mapping relationship set based on the identifier of the object to which the to-be-processed data belongs and a storage address of the to-be-processed data.

3. The method according to claim 1 or 2, wherein the determining the target object whose data needs to be recovered comprises:
receiving an IO request that carries a first identifier and first data, wherein the first data is data of a first object represented by the first identifier;
detecting whether the first data is infected with a virus or under a malicious attack; and
when it is determined that the first data is infected with a virus or under a malicious attack, determining the first object as the target object.

4. The method according to claim 1 or 2, wherein the determining the target object whose data needs to be recovered comprises:
detecting a data block stored in the storage system, to determine a target data block in the storage system infected with a virus or under a malicious attack;
querying the first mapping relationship set based on a storage address of the target data block, to determine a first object corresponding to the storage address of the target data block; and
determining the first object as the target object.

5. The method according to claim 3 or 4, wherein before the determining the first object as the target object, the method further comprises:
sending a first recovery request to a client device, wherein the first recovery request comprises an identifier of the first object, and the first recovery request is used to determine whether to recover data of the first object; and
receiving an acknowledgment message returned by the client device, wherein the acknowledgment message indicates to recover the data of the first object.

6. The method according to claim 1 or 2, wherein the determining the target object whose data needs to be recovered comprises:
when receiving a second recovery request sent by a client device, determining a first object as the target object, wherein the second recovery request comprises an identifier of the first object, and the second recovery request is used to request to recover data of the first object.

7. The method according to any one of claims 1 to 6, wherein the recovering the data of the target object based on the data stored at the first storage address in the first snapshot comprises:
detecting whether the data stored at the first storage address in the first snapshot is infected with a virus or under a malicious attack; and
when it is determined that the data stored at the first storage address in the first snapshot is not infected with a virus or under a malicious attack, determining the data stored at the first storage address in the first snapshot as recovered data of the target object.

8. The method according to claim 7, wherein the method further comprises:
updating, based on an identifier of the target object and the first storage address, the first mapping relationship set currently maintained by the storage system.

9. The method according to claim 7 or 8, wherein the method further comprises:
when it is determined that the data stored at the first storage address in the first snapshot is infected with a virus or under a malicious attack, determining, based on the first mapping relationship set associated with a second snapshot, a second storage address at which the data block of the target object is stored in the second snapshot, wherein the second snapshot is a snapshot obtained by performing a snapshot operation on the storage system at a second time prior to the first time, and the first mapping relationship set associated with the second snapshot comprises a correspondence between an object maintained by the storage system and a storage address of a data block of the object as of the second time; and
recovering the data of the target object based on data stored at the second storage address in the second snapshot.

10. The method according to any one of claims 1 to 9, wherein the target object is a file or a database/table.

11. A data recovery apparatus, used in a storage system, wherein the storage system stores data in a block-level storage manner, and the apparatus comprises:
a determining unit, configured to: determine a target object whose data needs to be recovered, wherein the target object is any type of semantic-level data, and the storage system stores a data block of the target object in a block-level manner; and determine, based on a first mapping relationship set associated with a first snapshot, a first storage address at which the data block of the target object is stored in the first snapshot, wherein the first snapshot is a snapshot obtained by performing a snapshot operation on data in the storage system at a first time, and the first mapping relationship set associated with the first snapshot comprises a correspondence between an object maintained by the storage system and a storage address of a data block of the object as of the first time; and
a recovery unit, configured to recover the data of the target object based on data stored at the first storage address in the first snapshot.

12. The apparatus according to claim 11, wherein the apparatus further comprises:
a receiving unit, configured to receive an input/output IO request, wherein the IO request indicates to perform a write operation on to-be-processed data, the IO request comprises an identifier of an object to which the to-be-processed data belongs, and the object to which the to-be-processed data belongs is any type of semantic-level data; and
an update unit, configured to update the first mapping relationship set based on the identifier of the object to which the to-be-processed data belongs and a storage address of the to-be-processed data.

13. The apparatus according to claim 11 or 12, wherein the apparatus further comprises:
a receiving unit, configured to receive an IO request that carries a first identifier and first data, wherein the first data is data of a first object represented by the first identifier; and
a detection unit, configured to detect whether the first data is infected with a virus or under a malicious attack, wherein
the determining unit is specifically configured to: when it is determined that the first data is infected with a virus or under a malicious attack, determine the first object as the target object.

14. The apparatus according to claim 11 or 12, wherein the apparatus further comprises:
a detection unit, configured to detect a data block stored in the storage system, to determine a target data block in the storage system infected with a virus or under a malicious attack, wherein
the determining unit is specifically configured to: query the first mapping relationship set based on a storage address of the target data block, to determine a first object corresponding to the storage address of the target data block; and determine the first object as the target object.

15. The apparatus according to claim 13 or 14, wherein the apparatus further comprises:
a sending unit, configured to send a first recovery request to a client device before the first object is determined as the target object, wherein the first recovery request comprises an identifier of the first object, and the first recovery request is used to determine whether to recover data of the first object; and
a receiving unit, configured to receive an acknowledgment message returned by the client device, wherein the acknowledgment message indicates to recover the data of the first object.

16. The apparatus according to claim 11 or 12, wherein
the determining unit is specifically configured to determine a first object as the target object when receiving a second recovery request sent by a client device, wherein the second recovery request comprises an identifier of the first object, and the second recovery request is used to request to recover data of the first object.

17. The apparatus according to any one of claims 11 to 16, wherein the recovery unit is specifically configured to:
detect whether the data stored at the first storage address in the first snapshot is infected with a virus or under a malicious attack; and
when it is determined that the data stored at the first storage address in the first snapshot is not infected with a virus or under a malicious attack, determining the data stored at the first storage address in the first snapshot as recovered data of the target object.

18. The apparatus according to claim 17, wherein the apparatus further comprises:
an update unit, configured to update, based on an identifier of the target object and the first storage address, the first mapping relationship set currently maintained by the storage system.

19. The apparatus according to claim 17 or 18, wherein
the determining unit is further configured to: when it is determined that the data stored at the first storage address in the first snapshot is infected with a virus or under a malicious attack, determine, based on the first mapping relationship set associated with a second snapshot, a second storage address at which the data block of the target object is stored in the second snapshot, wherein the second snapshot is a snapshot obtained by performing a snapshot operation on the storage system at a second time prior to the first time, and the first mapping relationship set associated with the second snapshot comprises a correspondence between an object maintained by the storage system and a storage address of a data block of the object as of the second time; and
the recovery unit is further configured to recover the data of the target object based on data stored at the second storage address in the second snapshot.

20. The apparatus according to any one of claims 11 to 19, wherein the target object is a file or a database/table.

21. A data recovery method, comprising:
determining, by a client device, a target object whose data needs to be recovered, wherein the target object is any type of semantic-level data, a data block of the target object is stored in a storage system in a block-level manner, and the storage system stores data in a block-level storage manner;
querying, by the client device, a second mapping relationship set based on an object tag of the target object, to determine a target storage address, wherein the target storage address is a storage address of the data block of the target object, and the second mapping relationship set comprises a correspondence between an object maintained by the client device and a storage address of a data block of the object in the storage system; and
sending, by the client device, a data recovery indication to the storage system, wherein the data recovery indication comprises the target storage address, and the data recovery indication indicates to recover the data of the target object based on the target storage address.

22. The method according to claim 21, wherein the method further comprises:
receiving, by the storage system, the data recovery indication sent by the client device; and
recovering, by the storage system, the data of the target object based on data stored at the target storage address in a first snapshot, wherein the first snapshot is a snapshot obtained by performing a snapshot operation on data in the storage system at a first time.

23. The method according to claim 21 or 22, wherein the method further comprises:
detecting, by the storage system, whether the data stored in the storage system is infected with a virus or under a malicious attack; and
sending, by the storage system, a storage address of an abnormal data block to the client device, wherein the abnormal data block is a data block in which data infected with a virus or under a malicious attack is located; and
the determining, by the client device, the target object whose data needs to be recovered comprises:
receiving, by the client device, the storage address of the abnormal data block sent by the storage system;
querying, by the client device, the second mapping relationship set based on the storage address of the abnormal data block, to determine an abnormal object; and
determining, by the client device, the target object in the abnormal object.

24. The method according to claim 21 or 22, wherein the determining, by the client device, the target object whose data needs to be recovered comprises:
determining, by the client device in response to a received object recovery indication, the target object, wherein the object recovery indication comprises an object identifier of the target object.

25. The method according to claim 22, wherein the recovering, by the storage system, the data of the target object based on the data stored at the target storage address in the first snapshot comprises:
detecting, by the storage system, whether the data stored at the target storage address in the first snapshot is infected with a virus or under a malicious attack; and
when it is determined that the data stored at the target storage address in the first snapshot is not infected with a virus or under a malicious attack, determining, by the storage system, the data stored at the target storage address in the first snapshot as recovered data of the target object.

26. The method according to claim 25, wherein the method further comprises:
when it is determined that the data stored at the target storage address in the first snapshot is infected with a virus or under a malicious attack, recovering, by the storage system, the data of the target object based on data stored at the target storage address in a second snapshot, wherein the second snapshot is a snapshot obtained by performing a snapshot operation on the storage system at a second time prior to the first time.

27. The method according to any one of claims 21 to 26, wherein the target object is a file or a database/table.

28. A compute device, comprising: a memory, a network interface, and one or more processors, wherein the one or more processors receive or send data through the network interface, and the one or more processors are configured to read program instructions stored in the memory, to perform the method according to any one of claims 1 to 10.

29. A data recovery system, comprising a client device and a storage system, wherein the client device is configured to perform the method performed by the client device according to any one of claims 21 to 27, and the storage system stores data in a block-level storage manner, and is configured to perform the method performed by the storage system according to any one of claims 21 to 27.

30. A computer program product comprising instructions, wherein when the instructions are run by a compute device or a processor, the compute device or the processor is caused to perform the method according to any one of claims 1 to 10 or any one of claims 21 to 27.

31. A computer-readable storage medium, comprising computer program instructions, wherein when the computer program instructions are executed by a compute device or a processor, the compute device or the processor performs the method according to any one of claims 1 to 10 or any one of claims 21 to 27.
